(19)

**Europäisches Patentamt**
**European Patent Office**
**Office européen des brevets**

(11) **EP 4 160 936 A1**

(12) **EUROPEAN PATENT APPLICATION**

(43) Date of publication:
05.04.2023 Bulletin 2023/14

(51) International Patent Classification (IPC):
*H04B 7/155* (2006.01)

(21) Application number: 22198167.3

(22) Date of filing: 27.09.2022

(52) Cooperative Patent Classification (CPC):
H04B 7/15592

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021 JP 2021162104**

(71) Applicant: **TOYOTA JIDOSHA KABUSHIKI
KAISHA**
**Aichi-Ken 471-8571 (JP)**

(72) Inventors:
• **TAKIZAWA, Kenichi**
**Koganei-shi, Tokyo, 184-8795 (JP)**
• **MORIYAMA, Masafumi**
**Koganei-shi, Tokyo, 184-8795 (JP)**

(74) Representative: **Cabinet Beau de Loménie
158, rue de l'Université
75340 Paris Cedex 07 (FR)**

(54) **COMMUNICATION SYSTEM, BASE STATION, TERMINAL, AND COMMUNICATION METHOD**

(57) The communication system includes a base station (1), a plurality of terminals (2, 2R, 2S, 2RA, 2RB) to be Non-Orthogonal Multiple Access-connected (NOMA-connected) to the base station. The plurality of terminals including a relay terminal (2R, 2RA, 2RB) to relay uplink communication data to the base station and a relayed terminal (2S) to transmit the uplink communication data to the base station via the relay terminal. The relay terminal transmits, to the base station, overlap data given by getting its own uplink communication data based on a communication request occurring in the relay terminal to overlap with the uplink communication data coming from the relayed terminal.

FIG.1

**Description**

BACKGROUND

TECHNICAL FIELD

The present disclosure pertains to a communication system, a base station, a terminal, and a communication method.

DESCRIPTION OF THE RELATED ART

Demanded are wireless access technologies that achieve a balance between a low delay and multi-connections. Among these technologies, a technology designed to relax orthogonality of radio signals is expected to be utilized for the purpose of increasing a number of terminals connectible to a base station. This technology is called Non-Orthogonal Multiple Access: NOMA) . By the way, such a case might arise in a wireless network as to cause a relatively high propagation loss between the base station and at least a part of a plurality of terminals connectible to the base station.
[Non-Patent Document 1] 3GPP TR 38.830, Study on NR coverage enhancements (Release 17), December, 2020 [Non-Patent Document 2] Moriyama, et al. "Experimental Evaluation of a Novel Up-Link NOMA System for IoT Communication Equipping Repetition Transmission and Receive Diversity" IEICE TRANS. COMMUN. Aug. 2019 Vol.E102-B, No.8. pp.1467-1476

SUMMARY

It is an aspect of an embodiment of the present disclosure to improve a communication efficiency of a terminal performing communications in an environment exhibiting a relatively high propagation loss in a wireless communication network based on NOMA-connections.
One aspect of the disclosed embodiments is illustrated by a communication system, a base station, a terminal, and a communication method. The communication system includes the base station, a plurality of terminals to be Non-Orthogonal Multiple Access-connected (NOMA-connected) to the base station. The plurality of terminals including a relay terminal to relay uplink communication data to the base station and a relayed terminal to transmit the uplink communication data to the base station via the relay terminal. The relay terminal transmits, to the base station, overlap data given by getting its own uplink communication data based on a communication request occurring in the relay terminal to overlap with the uplink communication data coming from the relayed terminal.
According to the communication system, the base station, the terminal, or the communication method of the disclosure, in a wireless communication network based on non-orthogonal multiple access, it is possible to improve the communication efficiency of the terminal communicating in an environment with relatively high propagation loss.

BRIEF DESCRIPTION OF THE DRAWINGS

FIG. 1 is a diagram illustrating a communication system according to a first embodiment;
FIG. 2 is a diagram illustrating a hardware configuration of a base station;
FIG. 3 is an explanatory diagram illustrating a relay process by a relay station;
FIG. 4 is an explanatory diagram illustrating effects yielded by using the relay station;
FIG. 5 is a diagram illustrating uplink and downlink dataflows between the base station and terminals;
FIG. 6 is a chart illustrating a first communication method involving a relayed station and the relay station;
FIG. 7 is a chart illustrating a second communication method of communications to the relay station from the relayed station;
FIG. 8 is a block diagram illustrating processes of the terminal other than the relay station;
FIG. 9A and FIG. 9B are block diagrams illustrating processes of the relay station that is not NOMA-connected to the relayed station;
FIG. 10 is a block diagram illustrating processes of the base station.
FIG. 11A and FIG. 11B are a block diagrams illustrating processes of the relay station that is NOMA-connected to the relayed terminal;
FIG. 12 is a flowchart illustrating control procedures of the base station;
FIG. 13 is a flowchart illustrating processes of selecting a candidate for the relay station and a candidate for the relayed station, measuring a propagation loss between the candidate for the relay station and the candidate for the relayed station, and selecting the relay station and the relayed station;
FIG. 14 is a diagram illustrating processes of selecting the candidate for the relay station and the candidate for the relayed station;
FIG. 15 is a diagram of a first example of a process of setting the propagation loss between the relay station and the relayed station;
FIG. 16 is a diagram of a second example of the process of setting the propagation loss between the relay station and the relayed station;
FIG. 17 is a flowchart illustrating how the base station sets the transmission power of the transmission to the relay station from the relayed station;
FIG. 18 is a flowchart illustrating how the base station sets the transmission power of the transmission to the relay station from each terminal;
FIG. 19 is a diagram illustrating a method of updating the transmission power in the relay station;
FIG. 20 is a flowchart illustrating a transmission power setting process by the base station for the relay station when the relay station finishes transmitting uplink data of the self-station;
FIG. 21 is a flowchart illustrating processes of the base station when the relay station finishes transmitting the uplink data of any one of the relayed stations with the data being relayed by the relay station;
FIG. 22 is a flowchart illustrating uplink and downlink data flows between the base station and the terminals according to a second embodiment;
FIG. 23 is a flowchart illustrating a method of searching for the relayed station.

DESCRIPTION OF THE EMBODIMENTS

A communication system, a base station, a terminal and a communication method according to an embodiment will hereinafter be described with reference to the drawings. This communication system involves establishing Non-Orthogonal Multiple Access (NOMA) connections between a plurality of terminals and a base station. The plurality of terminals includes a relay terminal to relay uplink communication data coming from other than a self-terminal to the base station, and relayed terminals that transmit the communication data to the base station via the relay terminal. The relay terminal transmits, to the base station, overlap data into which the uplink communication data based on a communication request occurring on the relay terminal overlap with the uplink communication data coming from the relayed terminal.

<First Embodiment> (System Configuration)

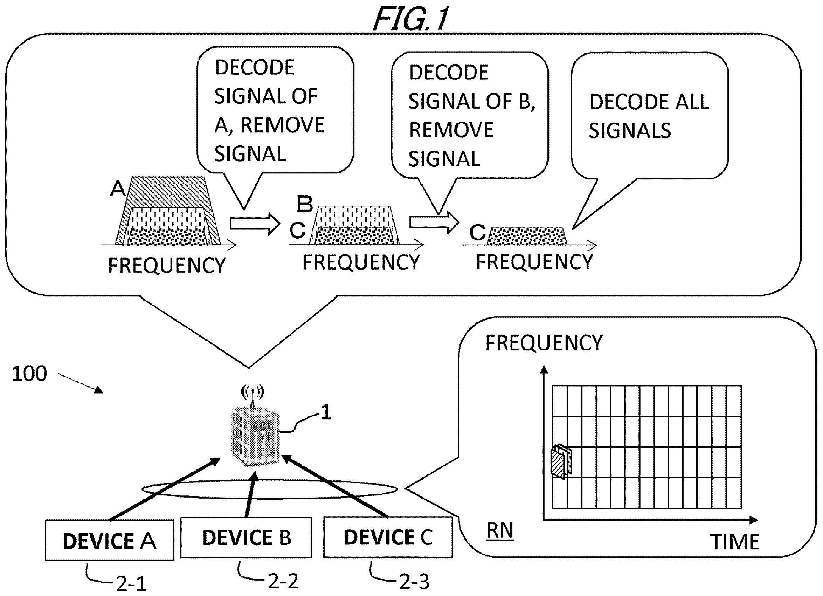

FIG. 1 is a diagram illustrating a communication system 100 according to a first embodiment. The communication system 100 includes a base station 1 and devices A, B, C and/or more equivalent devices that perform communications by accessing a radio network RN provided by the base station 1.
The radio network RN is a communication network called, e.g., Long Term Evolution (LTE), 5th Generation Mobile Communication System (5G), 6th Generation Mobile Communication System (6G) and other equivalent nomenclatures. The radio network RN may be called as a wireless network. The devices A, B, C... are terminals that access the radio network RN. The devices A, B, C... are communication devices mounted on drones, machine tools, a variety of sensors and other equivalent devices in addition to mobile phones, smartphones and in-vehicle communication devices.
The devices A, B, C... establish NOMA-connections with the base station 1 in the radio network RN. For example, the uplink communication data coming from the plurality of devices among the devices A, B, C... get overlapped on a physical resource defined by time and frequency and are thus transmitted. However, the uplink communication data to be transmitted in an overlapping state and coming from the plurality of devices have differences each equal to or greater than a certain limit in their reception power at the base station 1. In other words, it may therefore be said that FIG. 1 illustrates the communication system 100 in which the plurality of terminals is NOMA-connected to the base station 1.
The base station 1 executes repetitive SIC (Successive Interference Canceller) processes on the uplink communication data received in overlap by the NOMA connections. The base station 1 thereby separates the uplink communication data from each of the plurality of devices A, B, C.... In the example of FIG. 1, the base station 1 receives the uplink communication data from each of the plurality of devices A, B, C... in a same timeslot and in a same frequency domain. It is, however, assumed that a reception signal from the device A is the largest in reception power; the reception signal from the device B is the second largest in reception power; and the reception signal from the device C is the smallest in reception power.
The base station 1 executes, to begin with, an equalizing process exemplified by a Minimum Mean Square Error (MMSE) criterion on a signal coming from the device A with the reception power being the largest. The base station 1 then demodulates data received from the device A from the equalized signal, and thus decodes the reception data. The base station 1 generates, based on the demodulated and decoded reception data from the device A, a replica of the signal received by a reception antenna from the device A. The base station 1 subtracts the replica from the uplink communication data transmitted in overlap, thereby obtaining the uplink communication data received in overlap from the devices B, C exclusive of the device A. The base station 1 repeats these processes and thereby separates the uplink communication data from each of the plurality of devices A, B, C... Note that the plurality of devices A, B, C... will be generically termed terminals 2 in the following embodiments. The plurality of devices A, B, C... will be individually termed 2-1, 2-2, 2-3,... in the following embodiments. The terminals 2-1,... will be called the terminals 2 when generically termed. Incidentally, it does not mean that a number of the terminals 2 is limited to "3".

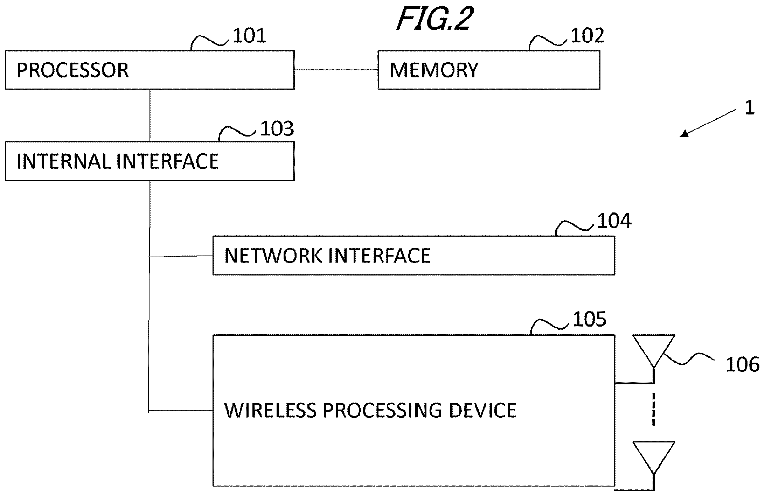

FIG. 2 is a diagram illustrating a hardware configuration of the base station 1 according to the embodiment. The base station 1 includes a processor 101, a memory 102, an internal interface 103, a network interface 104 used for performing the communications with other base stations, and a wireless processing device 105.

The processor 101 is also called a Central Processing Unit (CPU) or a Microprocessor Unit (MPU) . It does not mean that the processor 101 is limited to a single processor, but the processor 101 may take a multiprocessor configuration. In the processor 101, a single physical CPU connected by a single socket may have a multicore configuration. The processor 101 may include an arithmetic device having a variety of circuit configurations as exemplified by a Digital Signal Processor (DSP), a Graphics Processing Unit (GPU) and other equivalent processors. The processor 101 may also be configured to cooperate with an Integrated Circuit (IC) and other digital circuit or analog circuits. The IC may also be configured to include an LSI, an Application Specific Integrated Circuit (ASIC) and a Programmable Logic Device (PLD). The PLD may also be configured to include, e.g., a Field-Programmable Gate Array (FPGA). The processor 11 may therefore be what is referred to as, e.g., a Micro-Control Unit (MCU), an SoC (System-on-a-chip), a system LSI and a chipset.

The memory 102 stores command strings (computer programs) run by the processor 101, or stores data and other equivalents processed by the processor 101. The processor 101 and the memory 102 may also be called a Base Band Unit (BBU) in some cases. The BBU may also be said to be a controller. The internal interface 103 is defined as a circuit that connects a variety of peripheral devices to the processor 101.

The network interface 104 is a communication device via which the base station 1 accesses a network to which other base stations are connected. The network receiving the connections of other base stations is also called a backhaul. The backhaul is defined as, e.g., a wired network based on optical communications.

The wireless processing device 105 includes a transmitter to transmit radio signals and a receiver to receive the radio signals, and is connected to an antenna. In the wireless processing device 105, the antenna, the transmitter and the receiver are not limited to single lines. The wireless processing device 105 may have N-lines of the transmitters, the receivers and the antennas. The wireless processing device 105, which is referred to as a Remote Radio Head (RRH), may also be configured to be set up remotely by connecting to the BBU via a wired network based on, e.g., optical communications. Another available configuration is that a plurality of RRHs is connected to one BBU. Note that a network for connecting the RRHs to the BBU is also called a fronthaul.

A hardware configuration of the terminal 2 has components similar to those of the base station 1 in FIG. 2. To be specific, the terminal 2 includes the processor 101, the memory 102, the internal interface 103 and the wireless processing device 105. This being the case, the hardware configuration of the terminal 2 is the same as in FIG. 2, and hence the description thereof is omitted. In the terminal 2, however, the network interface 104 does not establish connections to other base stations. For example, the terminal 2 may include a communication device based on wireless Local Area Network (wireless LAN), Bluetooth (registered trademark), Bluetooth (registered trademark) Low Energy (BLE) and other equivalents in order to connect with devices other than the base station 1.

(Relay Function of Terminal)

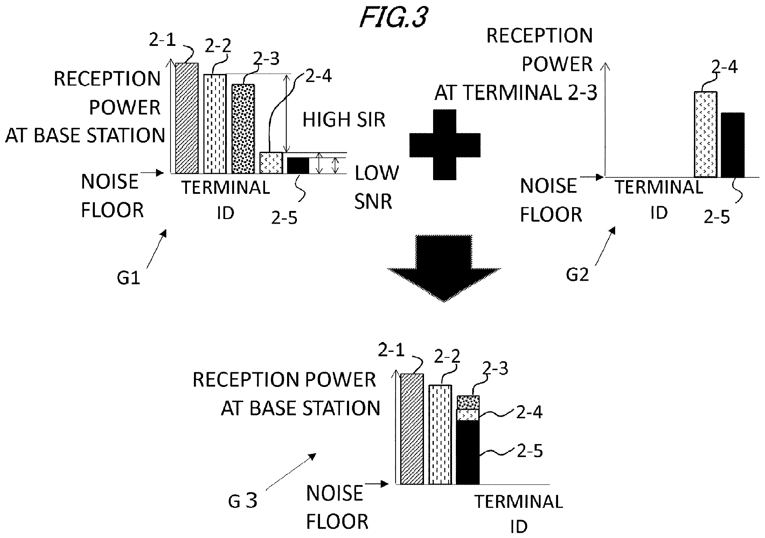

FIG. 3 is a diagram illustrating a relay process of a relay station 2R. An assumption herein is that the terminals 2-1 through 2-5 are connected to the radio network RN of the base station 1. A bar graph G1 given in an upper left portion of FIG. 2 represents reception power at the base station 1 with respect to noise floors (or noise levels) of the terminals 2-1 through 2-5. However, reception signals coming from other terminals 2 become interference signals with the respective reception signals also in the terminals 2-1 through 2-5.

In the graph G1, the terminals 2-1 and 2-2 have high Signal-to-Interference Ratios (SIRs) with respect to the interference signals coming from other terminals 2-4, 2-5. As a matter of course, the terminals 2-1 and 2-2 have high Signal-to-Noise Ratios (SNRs) with respect to noise floors. By contrast, the terminals 2-4 and 2-5 have only low SNRs with respect to the noise floors. The terminals 2-4 and 2-5 may be assumed to be in an environment having a large path loss (propagation loss) as at a cell edge of the radio network RN or as within a tunnel.

On the other hand, a graph G2 given in an upper right portion represents, e.g., in the terminal 2-3, reception power of the reception signals coming from the terminals 2-4, 2-5. Transmission signals from the terminals 2-4 and 2-5 having only the low SNR in the base station 1 are also to have the SNR to some extent in the terminal 2-3.

The embodiment is designed to improve transmission efficiency in the communication environments described above. Therefore, the communication system 100 employs, as the relay station 2R (also called a relay terminal), the terminal 2-3 or the equivalent in the environment not said to be large in path loss (propagation loss) in FIG. 3. To be specific, the communication system 100 selects the relay station 2R from within the plurality of terminals 2, and conducts the transmission via the selected relay station 2R. Note that the terminal 2 communicating with the base station 1 via the relay station 2R in the terminals 2 communicating with the base station 1 is referred to as a relayed station 2S. The relayed station 2S is also referred to as the relayed terminal.

In the embodiment, the relay station 2R transmits the transmission signals in such a way that the transmission signals (with transmission requests occurring in the self-station) thereof overlap with the transmission signals of the relayed station 2S. In this case, the relay station 2R gets the transmission signals of the relayed station 2S overlapped with the transmission signals of the relay station 2R itself in the way of decreasing the transmission power by a predetermined limit $\Delta P$ below the transmission power of the transmission signals of the relay station 2R itself. When a plurality of relayed stations 2S becoming relay targets exists, the relay station 2R sequentially gets the transmission signals of the respective relayed stations 2S overlapped with the transmission signals of the relay station 2R itself in the way of decreasing the transmission power by $\Delta P$. With the relay described above, the base station 1 is enabled to receive the reception signals from the terminals 2-4 and 2-5 in addition to the reception signals from the terminals 2-1, 2-2 and 2-3. In other words, as in a graph G3 of FIG. 3, the base station 1 establishes the NOMA-connections and is thereby enabled to communicate with each of the terminals 2 while ensuring the SIR and the sufficient SNR in the communication with the plural terminals 2. The relay in the embodiment is feasible without varying a codeword length.

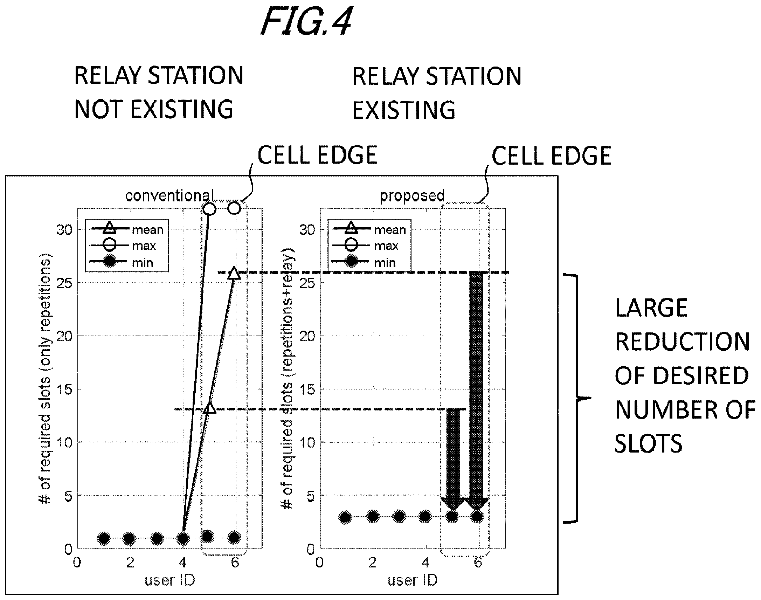

FIG. 4 is an explanatory diagram illustrating effects yielded by using the relay station 2R. In a wireless communication environment with the SNR being insufficient, the transmission station performs consecutive transmissions to repeatedly transmit the same signal (e.g., a packet) to the reception station. For instance, the transmission station repeatedly transmits the same signal at a plurality of timeslots. The communication system 100 thus improves the SNR. However, when a number of consecutive transmissions increases, the transmission efficiency decreases correspondingly.

FIG. 4 is the diagram for comparing a number of timeslots (the number of consecutive transmissions) in the case of not adopting the relay station 2R with a number of timeslots (a number of relay operations and the number of consecutive transmissions) in the case of adopting the relay station 2R. These numbers of timeslots may be each obtained by simulations.

In each of two graphs of FIG. 4, an axis of abscissa indicates a terminal ID (also called a user ID) of the terminal 2, and an axis of ordinate indicates a number of timeslots required for the consecutive transmissions of one piece of communication data. In the graphs, a black solid circle represents a minimum value of the number of consecutive transmissions obtained by simulations, a white solid circle represents a maximum value thereof, and a triangle mark represents an average value thereof. The left graph of FIG. 4 indicates a simulation result in the case of not having the relay station, while the right graph indicates a simulation result in the case of having the relay station 2.

In the simulations in FIG. 4, the sufficient SNRs are set in the terminals 2 having the user IDs 1 through 4. The terminals 2 having the user IDs 5 and 6 are assumed to be located at cell edge in the same way as the terminals 2-4, 2-5 in FIG. 3 are, and the low SNRs are set in the terminals 2 having the user IDs 5 and 6. As obvious from the Figure, it is recognized that a desired number of timeslots for obtaining a desirable SNR is decreased to a large extent by using the relay station 2R.

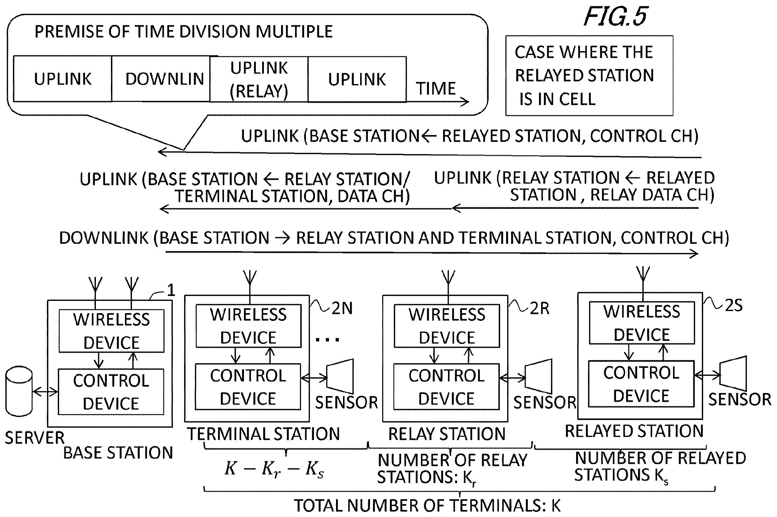

FIG. 5 is a diagram illustrating uplink and downlink dataflows between the base station 1 and the terminals. The uplink is also referred to as an uplink channel. The downlink is also referred to as a downlink channel. FIG. 5 depicts a system in which a server collects the data from sensors and other equivalents. The system includes the sever connected to the base station 1, and the sensors connected to the terminal station 2N, the relay station 2R, the relayed station 2S and other equivalents.

FIG. 5 illustrates simplified configurations of the base station 1, the terminal station 2N and other equivalents . In FIG. 5, a radio equipment of the base station 1, radio equipments of the terminal station 2N and other equivalents each correspond to the wireless processing device 105 in FIG. 2. A control device of the base station 1, control devices of the terminal station 2N and other equivalents correspond to the processor 101 and the memory 102 in FIG. 2. In the system, through the base station 1, the sensors transmit information to the server connected via the network to the base station 1 by the terminal station 2N, the relay station 2R, the relayed station 2S and other equivalents.

The terminal station 2N represents the terminal 2 executing normal processes but not operating as the relay station 2R and the relayed station 2S as well. The relay station 2R represents the terminal 2 that relays the uplink data of the relayed station 2S to the base station 1. The relayed station 2S represents the terminal 2, of which the uplink data are relayed by the relay station 2R to the base station 1. In FIG. 5, K stands for a total number of terminals 2, Kr denotes a number of relay stations 2R, Ks represents a number of relayed stations 2S, and K-Kr-Ks indicates a number of terminal stations 2N.

FIG. 5 illustrates a case in which the relayed station 2S exists within the cell of the base station 1, and the relayed station 2S and the base station 1 are enabled to perform the mutual communications on uplink and downlink control channels (also called control lines) at least without the relay. On the other hand, the relay station 2R temporarily receives the data, transmitted from the relayed station 2S, on an uplink data channel (also called a data line). The relay station 2R gets the transmission signals of the uplink data channel data occurring in the self-station overlapped with the transmission signals of the uplink data channel data received from the relayed station 2S, and thus transmits the overlapped data to the base station 1. The terminal station N transmits the transmission signals of the uplink data channel data occurring in the self-station to the base station 1 as usual.

In FIG. 5, it therefore follows that the physical resources defined by the frequency and the time are used in overlap by the plurality of terminals 2. However, the base station 1 allocates at least one timeslot to the uplink data channel extending from the relayed station 2S to the relay station 2R.

The relay station 2R transmits the transmission signals by getting the transmission signals of the relay station 2R itself overlapped with the transmission signals of the relayed station when relaying the uplink data channel signals of the relayed station 2S. The same is applied to the data signals and reference signals. A reference signal $x_{RS,\,relay}$ to be transmitted from the relay station 2R is expressed by the following formula.

[Mathematical Formula 1]

$$x_{RS,relay} = \underline{a_{K_r}x_{RS,K_r}} + \sum_{i=1}^{Ks} \underline{a_{K_r+i}x_{RS,r(i)}}$$

$$\text{Signal of Relay Station Itself} \qquad \text{Signal of Relay station}$$

A data signal $x_{DS,relay}$ to be transmitted from the relay station 2R is expressed by the following formula.

[Mathematical Formula 2]

$$x_{DS,relay} = \underline{a_{K_r}x_{DS,K_r}} + \sum_{i=1}^{Ks} \underline{a_{K_r+i}x_{DS,r(i)}}$$

$$\text{Signal of Relay Station Itself} \qquad \text{Signal of Relay station}$$

where $a_{K_r}$ and $a_{K_r}+i$ (i=1~Ks) are amplitude values of the transmission signals, which are obtained from transmission power $P_k$ allocated by the control device of the base station 1 to the transmission of the uplink data channel to the base station 1 from the relay station 2R which is a terminal 2-k. Symbols $x_{RS,Kr}$, $x_{RS,r(i)}$, $x_{DS,Kr}$, $x_{DS,r(i)}$ represent such signals that an average value of the amplitudes of the digitally-modulated transmission signals is standardized to "1".

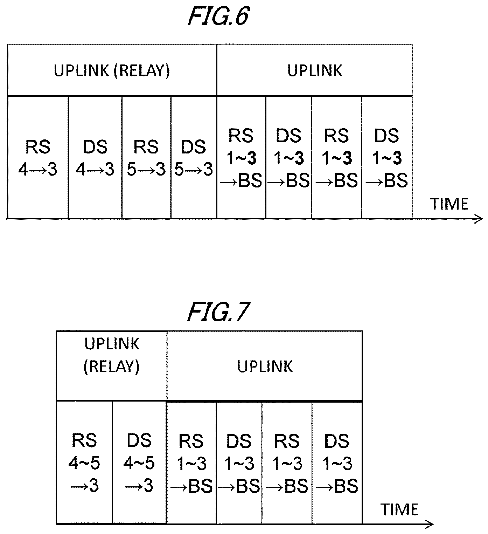

FIG. 6 is a chart illustrating a first communication method involving the relayed station 2S, the relay station 2R and the base station 1 (BS). In FIG. 6, the uplink data from the relayed station 2S to the relay station 2R are individually transmitted without establishing the NOMA-connections. FIG. 6 depicts how the timeslots are allocated in this case. In FIG. 6, a symbol RS represents a transmission of the reference signal, and DS stands for a transmission of the data signal. Numbers N→M indicated before and behind an arrow represent a transmission from the terminal 2-N to the terminal 2-M. The numbers N, M are defined as terminal IDs in this case. In FIG. 6, a field "Uplink (Relay)" exemplifies the allocation of the uplink transmission data to the relay station 2R from the relayed station 2S. Accordingly, "RS 4→3" represents the transmission of the reference signal to the terminal 2-3 serving as the relay station 2R from the terminal 2-4 serving as the relayed station 2S. "DS 4→3" represents the transmission of the data signal to the terminal 2-3 serving as the relay station 2R from the terminal 2-4 serving as the relayed station 2S. The example of FIG. 6 has no overlap, in which a couple of the relayed station 2S and the relay station 2R are allocated to one timeslot in the allocation of the uplink transmission data to the relay station 2R from the relayed station 2S.

On the other hand, a field "Uplink" in FIG. 6 exemplifies the transmission to the base station 1 from the relay station 2R. In this case, the transmissions of the reference signals or the data signals to the base station 1 from the plurality of terminals 2-1. 2-2 and 2-3 are allocated in overlap to the same timeslot. In FIG. 6, "RS 1~3 → BS" represents that the transmissions of the reference signals to the base station 1 from the terminals 2-1, 2-2 and 2-3 are carried out in the same timeslot. "DS 1~3 → BS" represents that the transmissions of the data signals to the base station 1 from the terminals 2-1, 2-2 and 2-3 are carried out in the same timeslot. In other words, the plurality of terminals 2-1, 2-2 and 2-3 is NOMA-connected to the base station 1.

FIG. 7 is a chart illustrating a second communication method of the communications to the relay station 2R from the relayed station 2S. Note that the communication method from the relay station 2R to the base station 1 (BS) is the same as in FIG. 6. The second communication method involves the overlap, between the plural terminals 2, of the uplink allocations from the relayed station 2S to the relay station 2R. To be specific, the relayed station 2S is NOMA-connected to the relay station 2R. In FIG. 7, the transmissions of the reference signals and the data signals to the terminal 2-3 serving as the relay station 2R from the terminals 2-4 and 2-5 serving as the relayed stations 2S are conducted in overlap in the same timeslot. In this case, the relay station 2R separates the reception signals coming from the plurality of NOMA-connected relayed stations 2S by SIC (Successive Interference Canceller). Then, the relay station 2R allocates predetermined transmission power to the reception signals coming from the plurality of separated relayed stations 2S, and gets the reception signals overlapped with the transmission data occurring in the self-station, thus transmitting the signals overlapped with the transmission data to the base station 1. A configuration in FIG. 7 may be said to be one example of the relay process by the relay terminal being NOMA-connected to the plurality of relayed terminals.

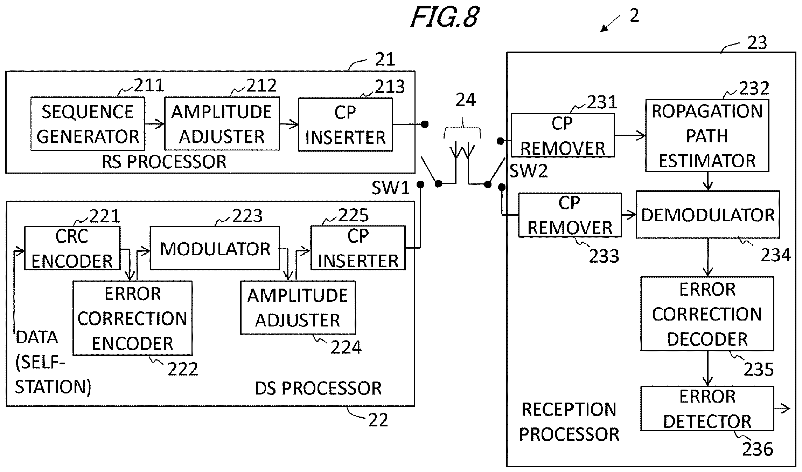

FIG. 8 is a block diagram illustrating processes of the terminal 2 (the terminal station 2N or the relayed station 2S) other than the relay station 2R. The processor 101 of the terminal 2 executes, as respective components in FIG. 8, the processes in accordance with a computer program deployed in an executable manner on the memory 102. The processes based on the computer program described above are the same with FIGS . 9 through 11. As in FIG. 8, the terminal 2 operating as the terminal station 2N or the relayed station 2S includes an RS (Reference Signal) processor 21, a DS (Data Signal) processor 22, a reception processor 23, and antenna 24.

The RS processor 21 generates the reference signal and transmits the generated reference signal to the base station 1 from the antenna 24. The RS processor 21 includes, e.g., a sequence generator 211, an amplitude adjuster 212, and a Cyclic Prefix (CP) inserter 213. The sequence generator 211 generates a signal sequence by using an orthogonal sequence exemplified by Zadoff-Chu sequence. The signal sequence generated by the sequence generator 211 is a sequence that is common among the plural terminals 2 performing the simultaneous transmissions. Consequently, when using this signal sequence as it is, the reference signals interfere with each other among the plural terminals 2, and hence each terminal 2 makes different the signal sequence for use. Therefore, each terminal 2 shifts a start point of the signal sequence by a predetermined number of samples in a way that makes round shifts of the signal sequence, corresponding to the terminal 2. The start point of the signal sequence is different per terminal 2, and it follows that the sequence used for the reference signal becomes different in each terminal 2.

The amplitude adjuster 212 adjusts an amplitude of the reference signal in order to transmit the reference signal by the transmission power indicated from the base station 1. The base station 1 indicates the transmission power to each terminal 2 so that a predetermined power difference occurs between reception power levels given from the respective terminals 2. The CP inserter 213 sets a signal interval called the cyclic prefix in each reference signal. The interference between the reference signals due to a delay of the signal is thereby restrained.

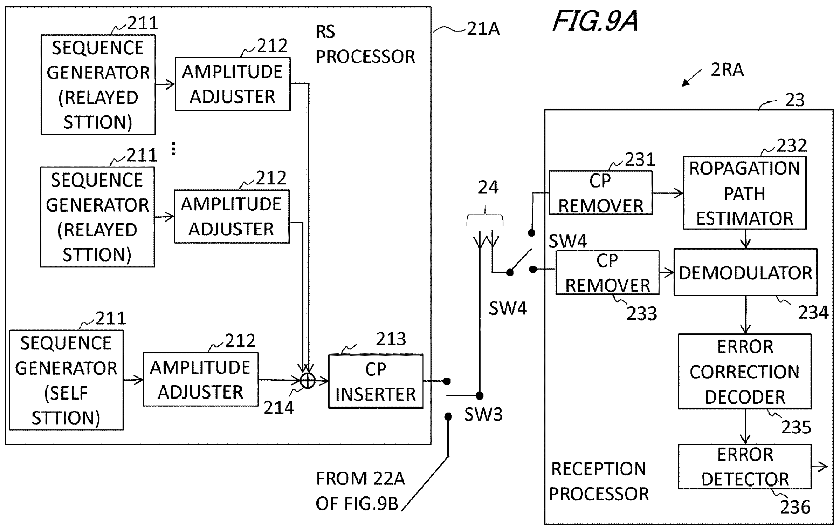

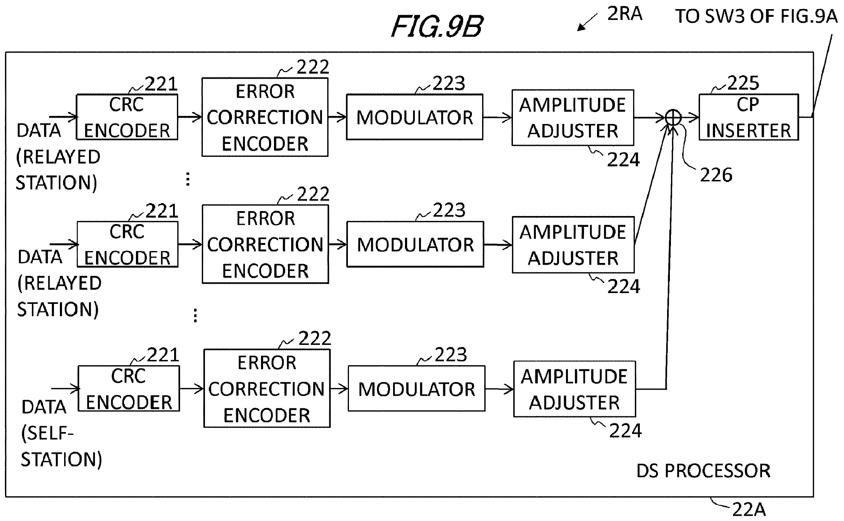

A DS processor 22 includes a Cyclic Redundancy Check (CRC) encoder 221, an error correction encoder 222, a modulator 223, an amplitude adjuster 224, and a CP inserter 225. The CRC encoder 221 adds a CRC error detection code to the data transmitted from the terminal 2. The error correction encoder 222 further error-correction-encodes the data. The error correction code may be a block code and a convolution code as well, in which an encoding type is not limited. The modulator 223 modulates the error-correction-encoded data. The modulation is exemplified by digital modulation, in which a modulation method is not limited. The modulation method is exemplified by Quadrature Amplitude Modulation (QAM) and Phase Shift Keying (PSK) . Processes of the amplitude adjuster 224 and the CP inserter 225 are the same as the processes of the amplitude adjuster 212 and the CP inserter 213 of the RS processor 21. Note that the RS processor 21 and the DS processor 22 are connected in, e.g., time division, to the antenna 24 through a switch SW1. Specifically, the switch SW1 multiplexes the signal coming from the RS processor 21and the signal coming from the DS processor 22. Functions of a switch SW2 and switches SW3 - SW8 illustrated in FIGS. 9 through 11 may be said to be similarly the multiplexing of the signals .

A reception processor 23 includes a CP remover 231, a propagation path estimator 232, a CP remover 233, a demodulator 234, an error correction decoder 235, and an error detector 236. The radio signals received by the antenna 24 are led (connected) in, e.g., time division by the switch SW2 to the CP remover 231 or the CP remover 233.

The CP remover 231 and the propagation path estimator 232 process the reference signals in the reception signals received by the antenna 24. The CP remover 231 removes the CP from the reference signal. The propagation path estimator 232 calculates a propagation path estimation value of a propagation path leading to the terminal 2 from the base station 1 on the basis of the reference signal from which the CP is removed. The propagation path estimation value may be said to be a variation amount of an amplitude and a phase of the radio signal on the propagation path leading to the antenna 24 from the base station 1 thereof.

The CP remover 233 to the error detector 236 process the data signal in the reception signals. The CP remover 233 removes the CP from the data signal received by the antenna 24. The demodulator 234 demodulates the transmitted data on the basis of the data signal from which the CP is removed. The error correction decoder 235 error-correction-decodes the demodulated data. The error detector 236 performs, e.g., CRC-based error detection with respect to the decoded data.

Note that the terminal 2 becomes a candidate for the relayed station when a propagation loss up to the base station 1 is larger than a certain threshold value, and the base station 1 selects this candidate terminal 2 as the relayed station 2S in the embodiment. The relayed station 2S transmits the uplink data (also called the uplink communication data) to the base station 1 via the relay station 2R.

FIG. 9A and 9B are block diagrams illustrating processes of a relay station 2RA that is not NOMA-connected to the relayed station 2S. Accordingly, the relay station 2RA does not execute the SIC process in FIG. 9A and 9B. In other words, the relay station 2RA in FIG. 9A and FIG. 9B are not premised on receiving the data in the same slot from the plurality of relayed stations 2S. It is noted that FIG. 9A and FIG. 9B are connected at the point of "FROM 22A OF FIG. 9B" in FIG. 9A and at the point of "TO SW3 OF FIG. 9A" in FIG. 9B.

As in FIG. 9A and FIG. 9B, the relay station 2RA includes an RS processor 21A, a DS processor 22A, a reception processor 23, switches SW3, SW4, and the antenna 24. Operations of the reception processor 23, the switch SW4 and the antenna 24 among these components are the same as those of the reception processor 23, the switch SW2 and the antenna 24 in FIG. 8, and therefore the descriptions thereof are omitted.

The RS processor 21A includes plural sequences of, e.g., the sequence generators 211 and the amplitude adjusters 212. A signal synthesizer 214 and the CP inserter 213 are connected posterior to the plurality of sequences. A first sequence of the plural sequences generates the reference signal for the self-station, and outputs the generated reference signal to the signal synthesizer 214. Provided are one or more second sequences that generate the reference signals of one or more relayed stations, and output the generated reference signals to the signal synthesizer 214. The signal synthesizer 214 adds, on the time base, the reference signals generated by the first and second sequences, and outputs the added reference signals to the CP inserter 225. The CP inserter 213 sets the cyclic prefixes to the reference signals synthesized by the signal synthesizer 214 and coming from the plurality of sequences. The signals, to which the cyclic prefixes are set, are handed over to the transmitter of the wireless processing device 105 (FIG. 2) by the switch SW3 and are transmitted to the base station 1 from the antenna 24.

The reference signals, which are thus synthesized by the signal synthesizer 214 and come from the plurality of sequences, pass through the propagation path leading to the base station 1 from the antenna 24 and arrive at the base station 1. The communication system 100 according to the embodiment transmits the reference signal that is different per relayed station 2S in order to make the relayed station 2S distinguishable by the second sequence in the base station 1. From this handling, the base station 1 determines which relayed station 2S the signal is received from and how many terminals 2 the signals are received from even when the reference signals are relayed by the relay station 2R. In other words, the base station 1 is enabled to use even the reference signals transmitted from the relay station 2RA in order to distinguish between the relay station 2RA and the relayed station 2S.

The DS processor 22A includes plural sequences of , e.g., CRC encoders 221, error correction encoders 222, modulators 223, and amplitude adjusters 224. A signal synthesizer 226 and a CP inserter 225 are connected posterior to the plural sequences. The first sequence on the plural sequences generates the data signal for the self-station, and outputs the generated data signal to a signal synthesizer 226. Provided are one or more second sequences that process the data signals coming from one or more relayed stations 2S and output the data signals to the signal synthesizer 226. The signal synthesizer 226 adds, on the time base, the data signals coming from the first and second sequences, and outputs the added data signals to the CP inserter 225. The CP inserter 225 sets the cyclic prefixes to the data signals synthesized by the signal synthesizer 226 and coming from the plural sequences. The data signals, to which the cyclic prefixes are set, are handed over to the transmitter of the wireless processing device 105 (FIG. 2) by the switch SW3 (FIG. 9A) and are transmitted to the base station 1 from the antenna 24 (FIG. 9A).

The data signals, which are thus synthesized by the signal synthesizer 226 and come from the plurality of sequences, pass through the propagation path leading to the base station 1 from the antenna 24 and arrive at the base station 1. The data signals synthesized by the signal synthesizer 226 and coming from the plurality of sequences may be said to be one example of overlapped data given by getting the uplink communication data based on a communication request occurring in the relay station 2R to overlap with the uplink communication data coming from the relayed terminal. In other words, the relay station 2RA in FIG. 9A and FIG. 9B may be said to be one example of the relay terminal that relays the uplink communication data to the base station 1. To be specific, by way of one example of the relay terminal, the relay station 2RA transmits, to the base station 1, the overlapped data given by getting the uplink communication data based on the communication request occurring in the relay station 2RA to overlap with the uplink communication data coming from the relayed terminal.

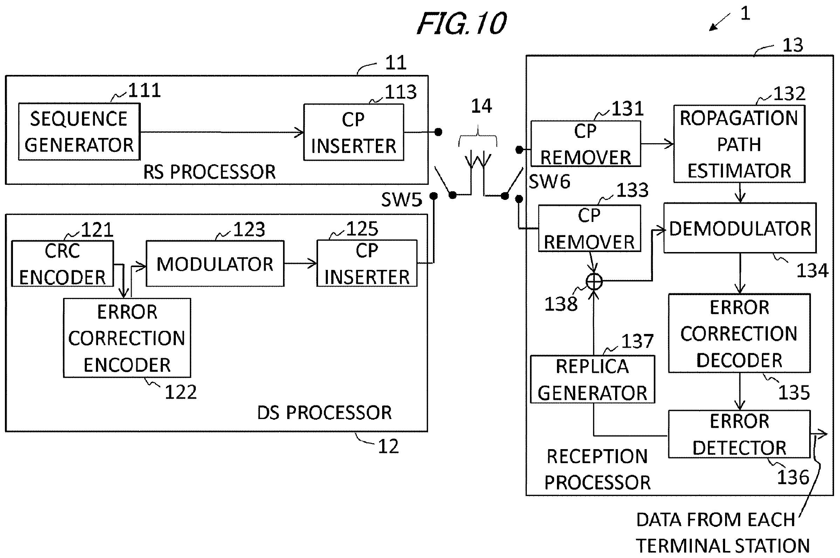

FIG. 10 is a block diagram illustrating processes of the base station 1. As in FIG. 10, the base station 1 includes an RS processor 11, a DS processor 12, a reception processor 13, switches SW5, SW6, and an antenna 14. The RS processor 11 includes, e.g., a sequence generator 111 and a CP inserter 113. The sequence generator 111 and the CP inserter 113 of the RS processor 11 are the same as the sequence generator 211 and the CP inserter 213 of the terminal 2 illustrated in FIG. 8. Specifically, the RS processor 11 of the base station 1 does not include the amplitude adjuster 212 but has the same processes as those of the RS processor 21 of the terminal 2, and hence the descriptions thereof are omitted.

The DS processor 12 includes a CRC encoder 121, an error correction encoder 122, a modulator 123, and a CP inserter 125. The CRC encoder 121, the error correction encoder 122, the modulator 123 and the CP inserter 125 are the same as the CRC encoder 221, the error correction encoder 222, the modulator 223 and the CP inserter 225 of the terminal 2 illustrated in FIG. 8. Specifically, the DS processor 12 of the base station 1 does not include the amplitude adjuster 224 but has the same processes as those of the DS processor 22 of the terminal 2, and hence the descriptions thereof are omitted. The process of the switch SW5 is the same as the process of the switch SW1 in FIG. 8, and hence the description thereof is omitted.

The reception processor 13 includes a CP remover 131, a propagation path estimator 132, a CP remover 133, a demodulator 134, an error correction decoder 135, an error detector 136, a replica generator 137, and a replica remover 138. The radio signals received by the antenna 14 are led (connected) in, e.g., time division by the switch SW6 to the CP remover 131 or the CP remover 133. The CP remover 131, the propagation path estimator 132 and the CP remover 133 are the same as the CP remover 231, the propagation path estimator 232 and the CP remover 233 of the terminal 2 in FIG. 8. On the other hand, the demodulator 134, the error correction decoder 135, the error detector 136, the replica generator 137 and the replica remover 138 of the base station 1 form an SIC loop for executing a SIC method. Namely, the reception processor 13 of the base station 1 is different from the terminal 2 in FIG. 8 in terms of including the replica generator 137 and the replica remover 138.

The demodulator 134 executes an equalization process on the reception signals received by the antenna 14 and extracts the reception signals coming from each terminal 2. In other words, the demodulator 134 extracts the reception signals coming from the specific terminal 2 through the equalization process on the basis of the propagation path estimation value, generated by the propagation path estimator 132, between each terminal 2 and the base station 1, and demodulates the extracted reception signals. The equalization process involves extracting, based on the propagation path estimation value between each terminal and the base station 1, the reception signal coming from the corresponding terminal 2 but restraining the reception signals coming from other wireless terminals.

Processes of the error correction decoder 135 and the error detector 136 are the same as those of the error correction decoder 235 and the error detector 236 of the terminal 2 in FIG. 8. The replica generator 137 generates a replica of the reception signal coming from the terminal 2 based on the demodulated and decoded data by using the propagation path estimation value generated by the propagation path estimator 132. The replica is defined as a simulation signal simulating the reception signal having the maximum power among the signals received by the antenna 14. In other words, the replica is the modulation signal arriving at the antenna 14 from one certain terminal, and is also what simulates the signal having a highest Signal-to-Interference Noise power Ratio (SINR).

The replica remover 138 removes the replica generated by the replica generator 137 from the radio signals received by the antenna 14. As a result, in an example of FIG. 10, the simulation signal corresponding to the modulation signal having the maximum power is removed from the received radio signals by the SIC loop. As in FIG. 10, a next signal generated by removing the simulation signal corresponding to the modulation signal having the maximum power from the received radio signals with the SIC loop is again returned to the SIC loop. As illustrated in FIG. 10 or in the upper portion of FIG. 1, the reception processor 13 separates the reception signals sequentially from the signal exhibiting the highest Signal-to-Interference Noise power Ratio (SINR) by executing the SIC loop. To be specific, the reception processor 13 separates the reception signals transmitted from the individual terminals 2 from the reception signals transmitted through the NOMA-connections from the plurality of terminals 2. The reception processor 13 repeats the SIC loop till the data with no error in the error detection by the error detector 136 get unobtainable from the reception signals. The reception processor 13 thus demodulates the reception signals coming from the individual terminals 2 out of the signals mixed with the reception signals coming from the plurality of terminals 2. The process of the reception processor 13 is one example where the controller of the base station receives, from the relay terminal, the overlapped data given by getting the uplink communication data based on the communication request occurring in the relay terminal to overlap with the uplink communication data coming from the relayed terminal.

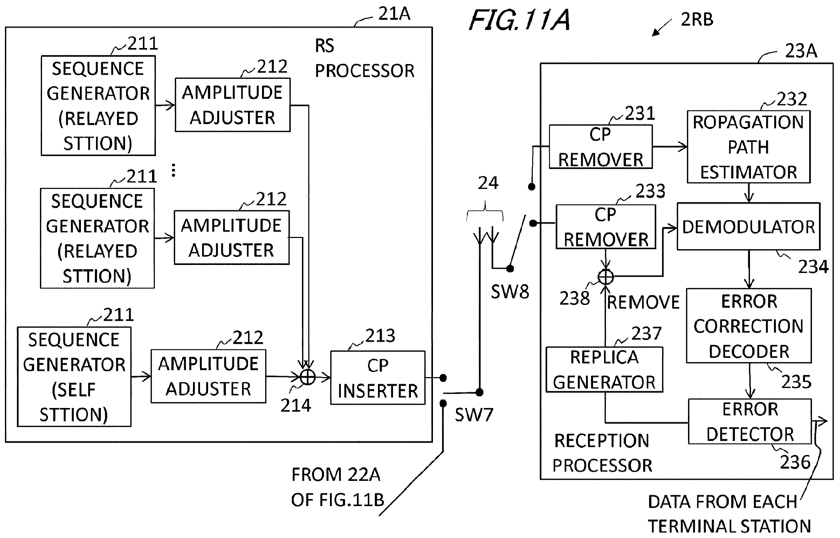

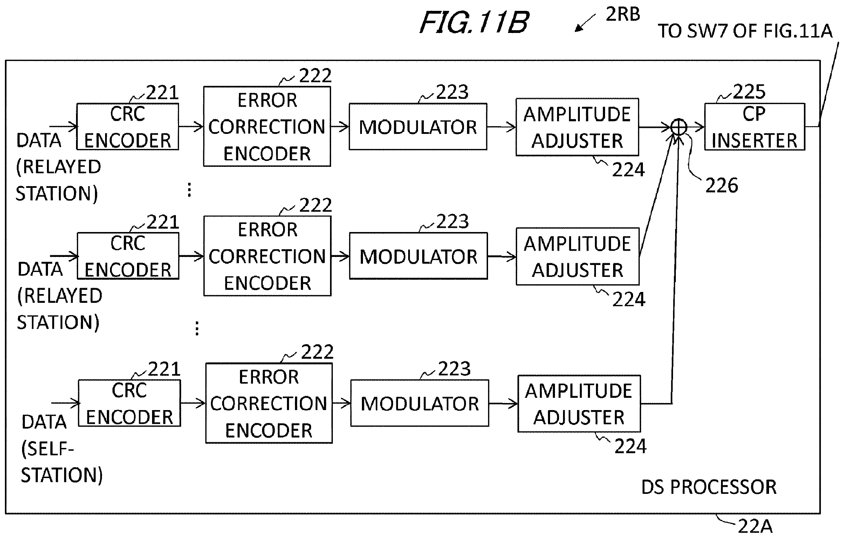

FIG. 11A and FIG. 11B are a block diagrams illustrating processes of a relay station 2RB that is NOMA-connected to the relayed station 2S. It is noted that 11A and FIG. 11B are connected at the point of "FROM 22A OF FIG. 11B" in FIG. 11A and at the point of "TO SW7 OF FIG. 11A" in FIG. 11B. Accordingly, the relay station 2RB executes SIC processing. As in FIG. 11A and FIG. 11B, the relay station 2RB includes an RS processor 21A, a DS processor 22A, a reception processor 23A, switches SW7, SW8, and an antenna 24. Of these components, the RS processor 21A, the DS processor 22A and the switch SW7 have the same configurations as those of the RS processor 21A, the DS processor 22A and the switch SW3 in FIG. 9A and 9B, and hence the descriptions thereof are omitted. Note that the relay station 2RB in FIG. 11A and FIG. 11B may be said to be one example of the relay terminal that relays the uplink communication data to the base station 1. The processes of the relay station 2RB in FIG. 11A FIG. 11B are also one example of transmitting, to the base station 1, the overlapped data given by getting the uplink communication data based on the communication request occurring in the relay terminal to overlap with the uplink communication data coming from the relayed terminal.

The reception processor 23A includes a CP remover 231, a propagation path estimator 232, a CP remover 233, a demodulator 234, an error correction decoder 235, an error detector 236, a replica generator 237, and a replica remover 238. The radio signals received by the antenna 24 are led (connected) in, e.g., time division by the switch SW8 to the CP remover 231 or the CP remover 233.

Of these components, the CP remover 231, the propagation path estimator 232 and the CP remover 233 have the same configurations as those of the terminal 2 in FIG. 8, and hence the descriptions thereof are omitted. On the other hand, in the same way as by the base station 1 in FIG. 10, the reception processor 23A executes the SIC loop by using the demodulator 234, the error correction decoder 235, the error detector 236, the replica generator 237 and the replica remover 238. Namely, the relay station 2RB establishes the NOMA-connections to the plurality of relayed stations 2S. The relay station 2RB demodulates the reception signals coming from the plurality of individual terminals 2 out of the radio signals mixed with the reception signals coming from the plurality of relayed stations 2S. The configuration of the relay station 2RB in FIG. 11A and FIG. 11B may be said to be one example of the relay terminal that establishes the NOMA-connections to the plurality of relayed terminals.

(Processing Flow)

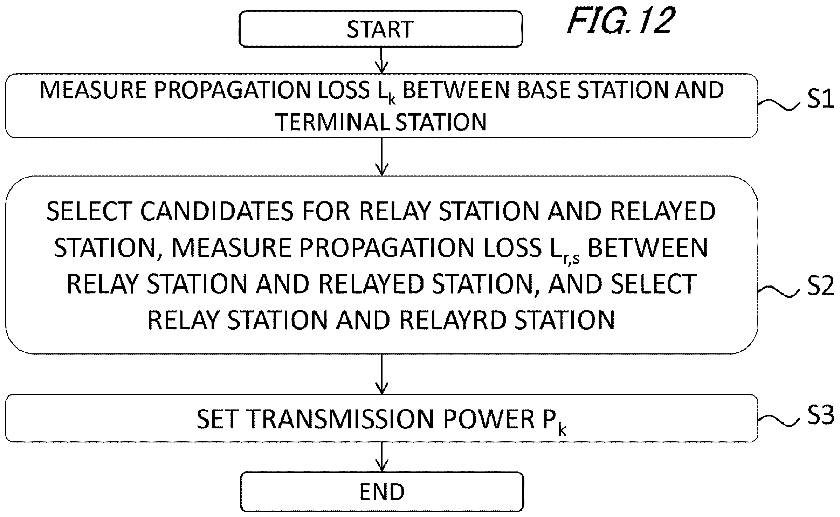

FIG. 12 is a flowchart illustrating control procedures of the base station 1. The processor 101 of the base station 1 executes the following processes in accordance with the computer program deployed in the executable manner on the memory 102. Note that "Pmax, UE" represents maximum transmission power settable in the terminal 2 in the following discussion. Further, "$L_{th,\,0}$" stands for a propagation loss threshold value as a criterion for selecting a candidate for the relay station 2R, and "Lth, 1" represents for a propagation loss threshold value as a criterion for selecting a candidate for the relayed station 2S. Herein, a value of "$L_{th,\,0}$" is smaller than "Lth, 1". Moreover, "Δ" represents a relay gain threshold value for determining a couple of the relay station 2R and the relayed station 2S from combinations of the candidates for the relay station 2R and the relayed station 2S. A symbol ΔP represents a power difference set between levels of the reception power received by the base station 1 from the respective terminals 2 in the NOMA-connections.

In the processes according to the embodiment, the base station 1 measures, from the reference signals transmitted from the respective terminals 2, a propagation loss $L_k$ of the path leading to the base station 1 from each terminal 2 (S1). Herein, "k" is defined as a terminal ID of the terminal 2 and is set to a value within a range of 1 through K. Hereinafter, a terminal 2 having a terminal ID of k (k = 1 to K) may be described as a terminal 2-k. However, the base station 1 causes the terminals 2-k to measure the propagation loss $L_k$ on the basis of the reference signals transmitted from the base station 1, and may obtain results thereof from the respective terminals 2-k.

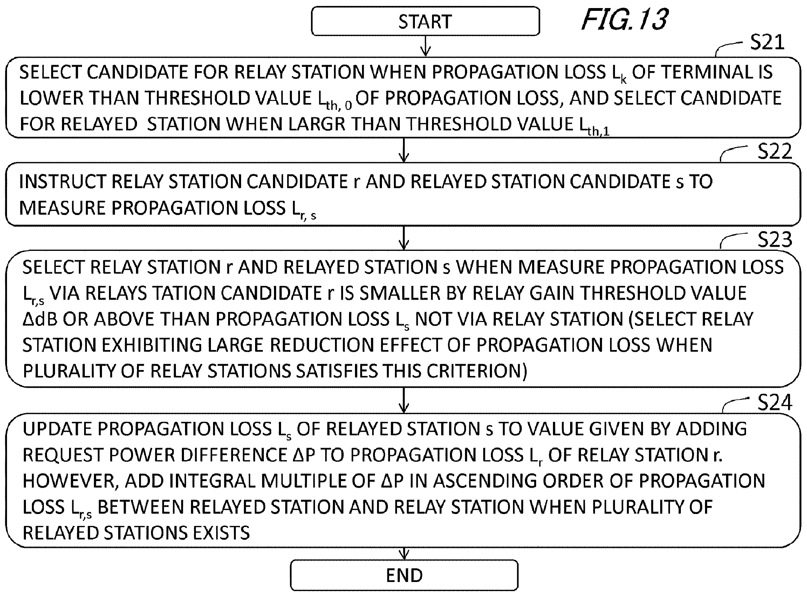

Next, the base station 1 executes processes of selecting the candidate for the relay station 2R and the candidates for the relayed station 2S, measuring a propagation loss $L_{r,s}$ between the candidate for the relay station 2R and the candidates for the relayed station 2S, and selecting the relay station 2R and the relayed station 2S (S2). Details of S2 will be described separately with reference to FIG. 13. The base station 1 sets the transmission power $P_k$ of the respective terminals 2-k (each terminal ID is given like this : k=1~K) (S3).

FIG. 13 is a flowchart illustrating processes of selecting the candidate for the relay station 2R and the candidate for the relayed station 2S, measuring the propagation loss $L_{r,s}$ between the candidate for the relay station 2R and the candidate for the relayed station 2S, and selecting the relay station 2R and the relayed station 2S.

In these processes, to start with, the base station 1 sets the terminal 2-k as the candidate for the relay station 2R when the propagation loss $L_k$ from the terminal 2-k (terminal ID: k) to the base station 1 is lower than the threshold value $L_{th,\,0}$ of the propagation loss. The base station 1 sets the terminal 2-k as the candidate for the relayed station 2S when the propagation loss $L_k$ is larger than the threshold value $L_{th,\,1}$ of the propagation loss (S21). The process of S21 may be said to be one example where the controller of the base station 1 obtains the propagation loss of the propagation path between each of the plural terminals 2 and the base station 1, and sets the terminal 2 with the propagation loss of the propagation path being smaller than a first criterion value as the candidate for the relay terminal. The process of S21 may also be said to be one example where the base station 1 sets, as the candidate for the relayed terminal, the terminal 2 with the propagation loss of the propagation path being equal to or larger than a second criterion value larger than the first criterion value. The threshold value $L_{th,\,0}$ is one example of the first criterion value, and the threshold value $L_{th,\,1}$ is one example of the second criterion value.

Next, the base station 1 instructs the terminal 2-r (terminal ID: r) as the candidate for the relay station and the terminal 2-s (terminal ID: s) as the candidate for the relayed station to measure the propagation loss $L_{r,s}$ of the path leading to the base station 1 from the terminal 2-s, in which the terminal 2-r serves as the relay station 2R (S22) . The base station 1 determines whether the propagation loss $L_{r,s}$ via the relay station 2R, i.e., the terminal 2-r serving as the candidate for the relay station gets improves by a relay gain threshold value $\Delta$dB or above (i.e., the propagation loss decreases under) a propagation loss $L_s$ given not via the terminal 2-r. When the propagation loss $L_{r,s}$ improves by the relay gain threshold value $\Delta$dB or above the propagation loss $L_s$, the base station 1 selects the terminal 2-r as the relay station 2R and the terminal 2-s as the relayed station 2S (S23) . However, the plurality of terminals 2-r satisfies this criterion (the propagation loss $L_{r,s}$ given via the relay station 2R improves by the relay gain threshold value $\Delta$dB or above the propagation loss $L_s$ given not via the relay station 2R), in which case the base station 1 selects, as the relay station 2R, the terminal 2-r having a large effect in reducing the propagation loss. The process of S23 may be said to be one example where the controller of the base station 1 selects the relay terminal and the relayed terminal from the candidates for the relay terminal and the relayed terminal. The process of S23 may also be said to be one example where the controller of the base station 1 calculates a first propagation loss when the candidate for the relayed terminal performs the communications with the base station 1 in the way of the data being relayed by the candidate for the relay terminal. The process of S23 may further be said to be one example where the controller of the base station 1 calculates a second propagation loss when the candidate for the relayed terminal performs the communications with the base station 1 in the way of the data not being relayed by the candidate for the relay terminal. In the process of S23, the controller of the base station 1 selects the candidate for the relayed terminal and the candidate for the relay terminal as the relayed terminal and the relay terminal when the first propagation loss improves by a third criterion value or above the second propagation loss. The relay gain threshold value $\Delta$dB is one example of the third criterion value.

Next, the base station 1 updates the propagation loss $L_s$ of the relayed station 2S to a value obtained by adding the request power difference $\Delta$P to the propagation loss $L_r$ of the relay station r. When the plurality of relayed stations exists, however, an integral multiple of $\Delta$P is added in an ascending order of the propagation loss $L_{r,s}$ between the relayed station 2S and the relay station 2R (S24) . To be specific, the base station 1 sets, as the propagation loss of the path leading to the base station 1 from the relayed station 2S, not an actual measurement value but a value calculated by the base station 1 in the way of giving the power difference $\Delta$P in the ascending order of the relayed station 2S. The base station 1 uses the set value in a transmission power setting process for the respective terminals 2 (including the terminal station 2N, the relay station 2R and the relayed station 2S) . The base station 1 uses the set value as the propagation loss of the path leading to the base station 1 from the relayed station 2S, and is thereby enabled to set the transmission power in the same procedures for all the terminals (including the terminal station 2N, the relay station 2R and the relayed station 2S).

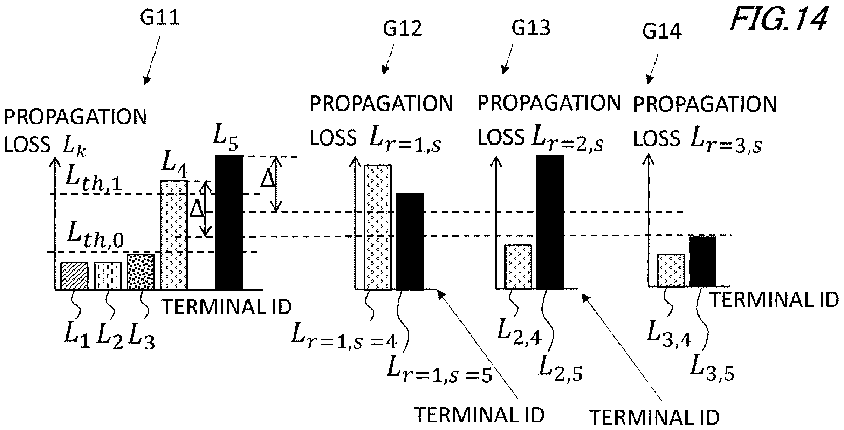

FIG. 14 illustrates an example of the processes (S21 through S23 in FIG. 13) of selecting the candidates for the relay station 2R and the candidate for the relayed station 2S. In the example of FIG. 14, one relay station 2R and two relayed stations 2S are selected. The axis abscissa of each graph in FIG. 14 indicates the terminal ID, and the axis of ordinate indicates an instance of the measurement value of the propagation loss. A graph G11 in FIG. 14 illustrates the propagation loss $L_k$ (k=1~5) of the path leading to the base station 1 from the respective terminals 2-k (the terminal ID: k=1~5).

As in graph G11, the propagation losses $L_1$, $L_2$, $L_3$ of the terminals 2-1, 2-2, 2-3 are smaller than the propagation loss threshold value $L_{th, 0}$. Accordingly, the base station 1 sets the terminals 2-1, 2-2, 2-3 as the candidates for the relay station 2R. On the other hand, the propagation losses $L_4$, $L_5$ of the terminals 2-4, 2-5 are values exceeding the propagation loss threshold value $L_{th, 1}$. The base station 1 therefore sets the terminals 2-4, 2-5 as the candidates for the relayed station 2S.

A graph G12 illustrates the propagation loss $L_{r = 1, s}$ when the terminal 2-1 serving as the relay station 2R relays the uplink data of the terminals 2-4, 2-5. Note that the propagation loss $L_{r = i, s=j}$ will also be described simply as $L_{i, j}$ in the following discussion. From a comparison between the graph G11 and the graph G12, the propagation loss $L_{1, 4}$ given when the terminal 2-1 relays the uplink data from the terminal 2-4 becomes worse than the propagation loss $L_4$ in a non-relay case. The propagation loss $L_{1, 5}$ given when the terminal 2-1 relays the uplink data from the terminal 2-5 becomes lower than the propagation loss $L_5$ in the non-relay case. A degree of decrease, i.e., a degree of improvement does not, however, reach the relay gain threshold value $\Delta$dB. Such being the case, the base station 1 does not take such a combination that the terminal 2-1 is set as the candidate for the relay station 2R, and the terminals 2-4, 2-5 are set as the candidates for the relayed station 2S.

A graph G13 illustrates the propagation loss $L_{r = 2, s}$ when the terminal 2-2 serving as the relay station 2R relays the uplink data of the terminals 2-4, 2-5. From a comparison between the graph G11 and the graph G13, the propagation loss $L_{2, 4}$ given when the terminal 2-2 relays the uplink data from the terminal 2-4 decreases, i.e., improves by the relay gain threshold value $\Delta$dB or above as compared with the propagation loss $L_4$ in the non-relay case. On the other hand, the propagation loss $L_{2, 5}$ given when the terminal 2-2 relays the uplink data from the terminal 2-5 remains almost the same as the propagation loss $L_5$ in the non-relay case. In other words, the degree of decrease thereof, i.e. , the degree of improvement does not reach the relay gain threshold value $\Delta$dB. Such being the case, the base station 1 takes only such a combination that the terminal 2-2 is set as the candidate for the relay station 2R, and the terminal 2-4 is set as the candidate for the relayed station 2S. On the other hand, the base station 1 does not take such a combination that the terminal 2-2 is set as the candidate for the relay station 2R, and the terminal 2-5 is set as the candidate for the relayed station 2S.

A graph G14 illustrates the propagation loss $L_{r=3,s}$ when the terminal 2-3 serving as the relay station 2R relays the uplink data of the terminals 2-4, 2-5. From a comparison between the graph G11 and the graph G14, the propagation loss $L_{3,4}$ given when the terminal 2-3 relays the uplink data from the terminal 2-4 decreases, i.e., improves by the relay gain threshold value $\Delta dB$ or above as compared with the propagation loss $L_4$ in the non-relay case. The propagation loss $L_{3,5}$ given when the terminal 2-3 relays the uplink data from the terminal 2-5 also decreases, i.e., improves by the relay gain threshold value $\Delta dB$ or above as compared with the propagation loss $L_5$ in the non-relay case. Such being the case, the base station 1 takes both of such combinations that the terminal 2-3 is set as the candidate for the relay station 2R, and the terminal 2-4 is set as the candidate for the relayed station 2S and that the terminal 2-3 is set as the candidate for the relay station 2R, and the terminal 2-5 is set as the candidate for the relayed station 2S.

Herein, both of the propagation loss $L_{2,4}$ and the propagation loss $L_{3,4}$ have the reducing effect larger than the relay gain threshold value $\Delta dB$ or above, and satisfy conditions of the propagation loss reducing effect. The propagation loss $L_{3,4}$ is larger in propagation loss reducing effect than the propagation loss $L_{2,4}$. Such being the case, in the embodiment, e.g., the base station 1 selects a terminal combination of the propagation loss $L_{3,4}$, i.e., selects the combination of the terminal 2-3 as the relay station 2R and the terminal 2-4 as the relayed station 2S. In this case, a configuration is that there is one relay station 2R (the terminal 2-3), and the data from two relayed stations 2S (the terminal 2-4 , 2-5) are relayed by one relay station 2R.

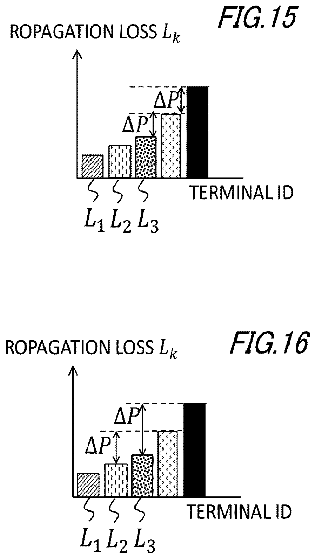

FIG. 15 illustrates a first example of the process (S24 in FIG. 13) of setting the propagation loss between the relay station 2R and the relayed station 2S. The first example is a case of selecting one station as the relay station 2R and two stations as the relayed stations 2S. In this case, the base station 1 sets, for the first relayed station 2S, i.e., the terminal 2-4, a value obtained by adding the request power difference $\Delta P$ to the propagation loss $L_r$ of the relay station 2R. There is the second relayed station 2S, i.e., the terminal 2-5, and hence the base station 1 goes on adding the integral multiple of $\Delta P$ in the ascending order of the propagation losses $L_{r,4}$, $L_{r,5}$ between the relayed station and the relay station. Accordingly, the result goes like this: $L_{r,4}=L_3+\Delta P$, $L_{r,5}=L_3+2\Delta P$. Herein, the request power difference $\Delta P$ is one example of a fourth criterion value. FIG. 15 illustrates one example of causing the relay terminal, when relaying the uplink communication data coming from the relayed terminal, to transmit, to the base station, the uplink communication data coming from the relayed terminal by the transmission power smaller by at least the fourth criterion value than the transmission power when transmitting the uplink communication data based on the communication request occurring in the relay terminal.

FIG. 16 illustrates a second example of the process (S24 in FIG. 13) of setting the propagation loss between the relay station 2R and the relayed station 2S. The second example is a case of selecting two stations as the relay stations 2R and selecting one station as the relayed station 2S for each of the relay stations 2R. This case corresponds to the case in which, e.g., the propagation loss $L_{2,4}$ is lower than the propagation loss $L_{3,4}$ in FIG. 14. In this case, the base station 1 sets, for the terminal 2-4 as the relayed station 2S, a value obtained by adding the request power difference $\Delta P$ to the propagation $L_2$ of the terminal 2-2 as the first relay station 2R. Similarly, the base station 1 sets, for the terminal 2-5 as the relayed station 2S, a value obtained by adding the request power difference $\Delta P$ to the propagation $L_3$ of the terminal 2-3 as the second relay station 2R. Accordingly, the result goes like this: $L_{2,4}=L_2+\Delta P$, $L_{3,5}=L_3+\Delta P$. FIG. 16 also illustrates one example of causing the relay terminal, when relaying the uplink communication data coming from the relayed terminal, to transmit, to the base station, the uplink communication data coming from the relayed terminal by the transmission power smaller by at least the fourth criterion value than the transmission power when transmitting the uplink communication data based on the communication request occurring in the relay terminal.

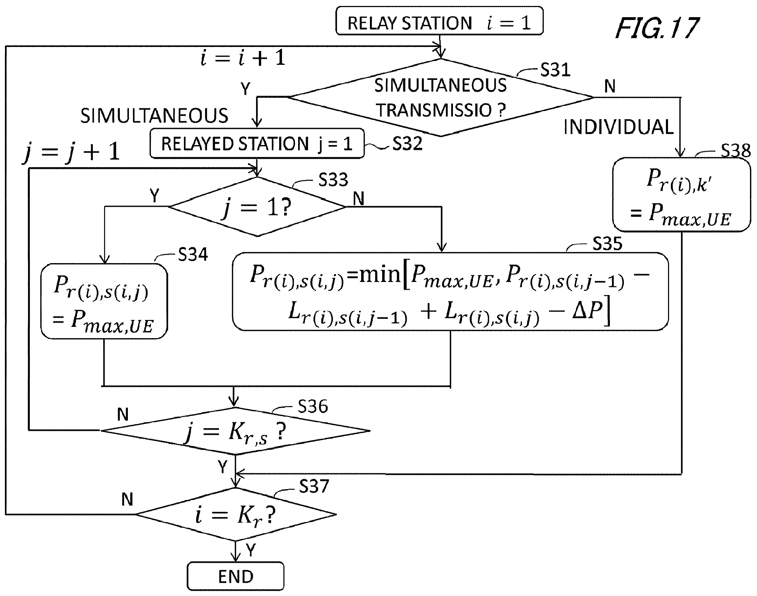

FIG. 17 is a flowchart illustrating how the transmission power $P_k$ of the transmission to the relay station 2R from the relayed station 2S is set with respect to the process (S3 in FIG. 12) in which the base station 1 sets the transmission power $P_k$ for the terminal 2-k. The base station 1 executes the process repeatedly by a number Kr of the relay stations 2R (S37) . In FIG. 17, a symbol "i" represents an index that indicates the relay station 2R.

In this process, the base station 1 determines whether the relay station 2R (index i) being now in processing receives simultaneous transmissions from the plurality of relayed stations 2S. The simultaneous transmissions connote the transmissions based on the NOMA-connections, and also connote a case in which the plurality of relayed stations 2S transmits the uplink data in the same timeslot.

When determined to be the simultaneous transmissions in S31, the base station 1 sets $P_{max,\ UE}$ as the maximum transmission power of the terminal 2 for the first relayed station 2S (index j=1) in the plural relayed stations 2S (index j) (S34) . Namely, the setting goes like this: $P_{r(i),\ s(i,\ j)}=P_{max,\ U}$. The base station 1, after adjusting a propagation loss difference between the propagations from the respective relayed stations 2S up to the relay station 2R, sets a value obtained by subtracting the request power difference $\Delta P$ from the transmission power of the relayed station 2S (index j-i) located one before, for the second and subsequent relayed stations 2S (index j) (S35) . Concretely, the base station 1 sets like this: $P_{r(i),\ s(i,\ j)}=_{r(i),\ s(i,\ j-1)}-L_{r(i),\ s(i,\ j-1)}+L_{r(i),\ s(i,\ j)}-\Delta P$. Herein, $P_{r(i),\ s(i,\ j-1)}$ represents the transmission power of the relayed station 2S being set one before. Then, $-L_{r(i),\ s(i,\ j-1)}+L_{r(i),\ s(i,\ j)}$ is a term for adding, to the transmission power

$P_{r(i), s(i, j)}$, the propagation loss $L_{r(i), s(i, j)}$ up to the relay station from the relayed station 2S (index j) being now in the processing after temporarily cancelling the propagation loss $L_{r(i), s(i, j-1)}$ used for the transmission power of the relayed station 2S being set one before. The relay station 2R (index i) receives the reception power from which the propagation loss $L_{r(i), s(i, j)}$ is reduced, and hence, with this process, it follows that the power difference $\Delta P$ occurs between the levels of the reception power given from the respective relayed stations 2S (index j). Note that the transmission power $P_{r(i), s(i, j)}$ calculated by an arithmetic operation of min[] is set not to exceed the maximum transmission power $P_{max, UE}$ in S35.

The base station 1 iterates the processes of S32 through S35 by a number $K_{r, s}$ of the relayed stations (S36). Herein, $K_{r, s}$ is the number of the relayed stations 2S from which the relay station 2R being now in the processing relays the data. When individually determined in S31, i.e., one relay station 2R receives the uplink data by simultaneously connecting to only one relayed station 2S. In this case (N in S31), the base station 1 sets the transmission power of the relayed station 2S to the maximum transmission power $P_{max, UE}$ (S38). The base station 1 repeats the processes described above by the number $K_r$ of the relay stations 2R (S37) and finishes processing.

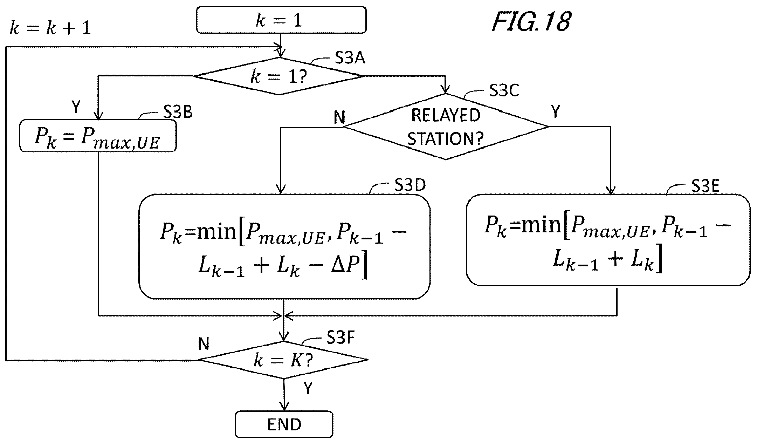

FIG. 18 is a flowchart illustrating how the base station 1 sets the transmission power $P_k$ from each of the terminals 2-k to the base station 1 in the process (S3 in FIG. 3) where the base station 1 sets the transmission power $P_k$ for the terminals 2-k. However, it may be assumed that the data of the uplink transmission with respect to the relayed station 2S will have reached the relay station 2R in this process . Accordingly, with respect to the uplink data of the relayed station 2S, the transmission power of the uplink data of the relayed station 2S, overlapping with the uplink data of the relay station 2R itself, is set in the relay station 2R.

In this process, the base station 1 sets the maximum transmission power $P_{max, UE}$ for the first terminal 2-1 (k=1 in S3A) (S3B) . With respect to the second and subsequent terminals 2-k,the base station 1 determines whether the terminal 2-k concerned is the relayed station 2S (S3C) . When the terminal 2-k concerned is not the relayed station 2S (N in S3C), the base station 1, after adjusting the propagation loss difference between the propagations from the respective terminals 2-k up to the base station 1, sets a value given by subtracting the request power difference $\Delta P$ from the transmission power of the terminal 2-k-1 processed one before (S3D) . Namely, the setting goes like this: $P_k=P_{k-1}- L_{k-1} + L_k-\Delta P$. Herein, $P_{k-1}$ is the transmission power of the terminal 2-k-1 being set one before. Then, $- L_{k-1} + L_k$ is a term for adding, to the transmission power $P_k$, the propagation loss $L_k$ up to the base station 1 from the terminal 2-k being now in the processing after temporarily cancelling the propagation loss $L_{k-1}$ used for the transmission power of the terminal 2-k-1 being set one before. The base station 1 receives the reception power from which the propagation loss $L_k$ is reduced, and hence, with this process, it follows that the power difference $\Delta P$ occurs between the levels of the reception power given from the respective terminals 2-k.

Whereas when determining in S3C that the terminal 2-k concerned is the relayed station 2S (Y in S3C), the base station 1 sets a value given by adjusting the propagation loss difference between the propagations up to the base station 1 from each of the terminals 2-k, out of the transmission power of the terminal 2-k-1 processed one before (S3E). In this case, as in S3D, the request power difference $\Delta P$ is not subtracted. Namely, the setting goes like this: $P_k=P_{k-1}- L_{k-1} + L_k$. As described above, $- L_{k-1} + L_k$ is a term for adding, to the transmission power $P_k$, the propagation loss $L_k$ up to the base station 1 from the terminal 2-k being now in the processing after temporarily cancelling the propagation loss $L_{k-1}$ used for the transmission power of the terminal 2-k-1 being set one before.

However, for the relayed station 2S, the base station 1 sets the value given by adding the request power difference $\Delta P$ to the propagation loss $L_r$ of the relay station 2R as the propagation loss $L_s$ of the relayed station 2S by the process in S24 of FIG. 13. There is the plurality of relayed stations 2S, in which case the base station 1 adds the integral multiple of $\Delta P$ (in the ascending order of the propagation losses $L_{r, s}$ between the relayed station s and the relay station r) to the propagation loss $L_s$ between the relayed station 2S and the base station 1 via the relay station 2R. In fact, however, when the uplink data of the relayed station 2S are relayed by the relay station 2R, the propagation loss $L_s$ of the data to be relayed is determined by the propagation loss between the relay station 2R and the base station 1. Therefore, the base station 1 sets the value given by adjusting the propagation loss difference between the propagations up to the base station 1 from the respective terminals 2-k, out of the transmission power of the terminal 2-k-1 processed one before in accordance with S3E. From this setting, it follows that the reception power, at the base station 1, of the data relayed by the relay station 2R has the transmission power difference $\Delta P$ occurs between the relay station 2R and the first relayed station and between the relay station 2R and the relayed station 2S. As a result, the relay station 2R relays the uplink transmission data from the relayed station 2S with the transmission power difference $\Delta P$. In other words, the process of S3E is one example of causing the relay terminal, when relaying the uplink communication data coming from the relayed terminal, to transmit, to the base station 1, the uplink communication data coming from the relayed terminal by the transmission power smaller by at least the fourth criterion value than the transmission power when transmitting the uplink communication data occurring in the relay terminal. The process of S3E is also one example where the controller of the base station 1 indicates, to the relay terminal, the transmission power smaller by the fourth criterion value. The base station 1 repeats the processes of S3A through S3E by the number K of all the terminals 2 (S3F).

Note that the propagation loss $L_r$ (fixed value) of the relay station 2R may also be used as the propagation loss of the relayed station 2S (which is the same with the plurality of relayed stations) of which the data are relayed by the relay station 2R without depending on the relayed station 2S in the processes of FIG. 18. To be specific, $P_r+L_r$ is set as the transmission power for the relay station 2R so as to enable the base station 1 to receive the data with the reception power $P_r$, in which case the base station 1 may simply set the transmission power $P_r+L_r-\Delta P$ for the first relayed station 2S with the data being relayed by the relay station 2R. The base station 1 is thereby enabled to receive the data with the reception power $P_r-\Delta P$. Similarly, the base station 1 may simply set the transmission power $P_r+L_r-2\Delta P$ for the second relayed station 2S with the data being relayed by the relay station 2R so as to enable the base station 1 to receive the data with the reception power $P_r-2\Delta P$. Generally, the base station 1 may simply set the transmission power $P_r+L_r-s\Delta P$ for the s-th relayed station 2S with the data being relayed by the relay station 2R so as to enable the base station 1 to receive the data with the reception power $P_r-s\Delta P$. Herein, $L_r$ is the propagation loos of the path leading to the base station 1 from the relay station 2R.

When the base station 1 uses the propagation loss $L_r$ (fixed value) of the relay station 2R as the propagation loss of the relayed station 2S of which the data are relayed by the relay station 2R without depending on the relayed station 2S, the processes of S3C and S3E in FIG. 18 are unnecessary. In this case, owing to the process of S3D, the base station 1 is enabled to set the transmission power for all the terminals 2 including normal terminals 2 that do not perform relaying, the relay station 2R and the relayed station 2S.

To be specific, the data coming from the terminal 2-k serving as the relayed station 2S are relayed by the relay station 2R, in which case the propagation loss $L_k$ takes the same value without depending on the relayed station 2S, corresponding to the propagation path up to the base station 1 from the relay station 2R. In other words, the propagation loss up to the base station 1 from the relay station 2R is used for the relayed station 2S of which the data are relayed by the relay station 2R, whereby the transmission power $P_k$ may be set by the process of S3D in FIG. 18 similarly to other terminals 2.

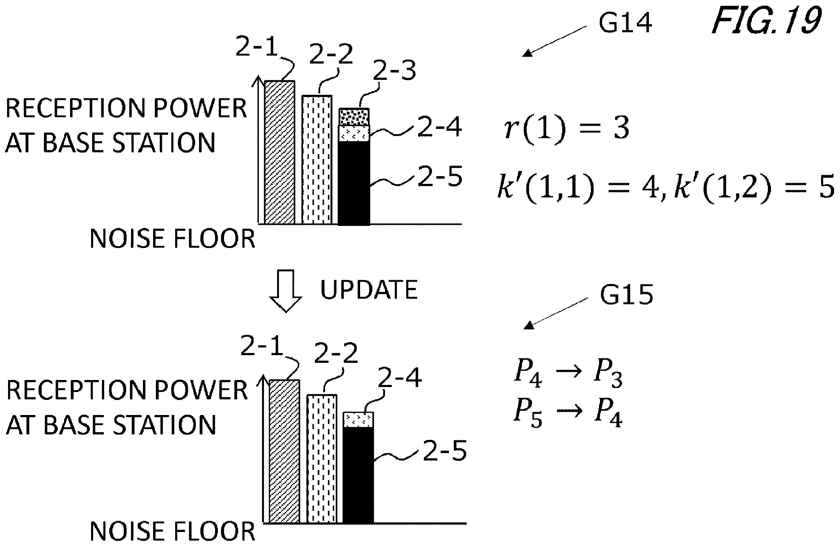

FIG. 19 is a chart diagram illustrating a method of updating the transmission power in the relay station 2R. When the relay station 2R finishes transmitting the data of the self-station, the data transmission of the relayed station 2S still remain uncompleted, in which case processes in FIG. 19 are executed. In this case, the base station 1 indicates the transmission power to the relay station 2R. The relay station 2R updates the highest transmission power in those of the relayed stations 2S to the transmission power of the relay station 2R in accordance with the indication given from the base station 1 . Specifically, the relay station 2R updates, to the maximum power, the transmission power from the relayed station 2S concerned to the base station 1. When there are other relayed stations 2S with the transmission being uncompleted, the update is carried out to increase the transmission power levels of other relayed stations 2S.

G14 in FIG. 19 is a graphic chart illustrating the reception power of the base station 1 before the relay station 2R finishes transmitting the data of the self-station. Idealistically, the base station 1 receives the data with the transmission power difference $\Delta P$ throughout the terminal 2-3 as the relay station 2R and the terminals 2-5, 2-5 as the relayed stations 2S. For example, the transmission power difference $\Delta P$ is expressed such as: P3-P4=P4-P5=$\Delta P$, where P3, P4, P5 are the reception power of the terminals 2-3, 2-4, 2-5 at the base station 1.

G15 in FIG. 19 is a graphic chart illustrating the reception power of the base station 1 after the relay station 2R finishes transmitting the data of the self-station. In this case, the base station 1 instructs the relay station 2R to increase by $\Delta P$ the transmission power of the terminals 2-4, 2-5. Specifically, the relay station 2R increases the transmission power of the uplink data coming from the terminals 2-5, 2-5 serving as the relayed stations 2S so that the reception power of the terminals 2-4, 2-5 at the base station 1 goes like this: P4=P3, P5=P4.

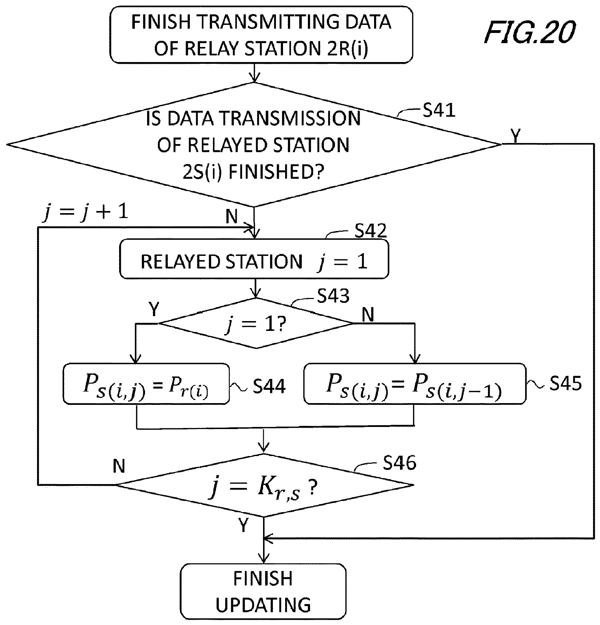

FIG. 20 is a flowchart illustrating a transmission power setting process executed by the base station 1 for the relay station 2R when the relay station 2R finishes transmitting the uplink data of the self-station. Herein, for instance, it is assumed that a consecutive transmission count N is initially set in the relay station 2R. However, such a case happens that the relay station 2R finishes transmitting the uplink data of the self-station before implementing the initially-set consecutive transmission count N. FIG. 20 illustrates the transmission power setting process executed by the base station 1 for the relay station 2R in such a case. Now in FIG. 20, each of the plural relay stations 2R is expressed by the relay station 2R(i) . A symbol "i" stands for an index of a relay station count, and takes a value of 1 through the relay station count. Each of the plural relayed stations 2S of which the data are relayed by the relay station 2R(i) is expressed by a relayed station 2S(i, j). A symbol "j" is an index of the relayed station, and takes a value of 1 through a relayed station count $K_{r,\,s}$.

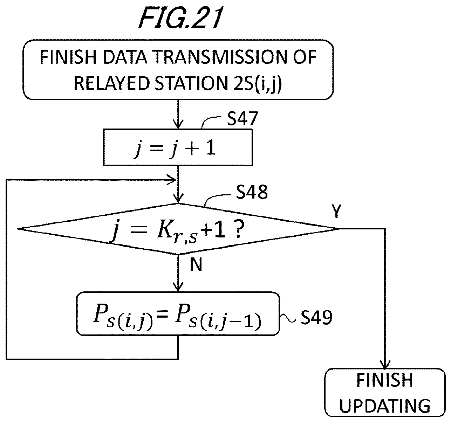

In this process, the base station 1 determines whether the relay station 2R(i) finishes transmitting the uplink data of all the relayed stations 2S(i, :) (S41). Herein, a colon (:) represents all the relayed stations 2S. When the relay station 2R(i) has already finished transmitting the uplink data of all the relayed stations 2S(i, :) (Y in S41), the base station 1 finishes the processes in FIG. 21.

Whereas when the relay station 2R(i) has not finished transmitting the uplink data of all the relayed stations 2S(i, :) (N in S41), the base station 1 specifies the relayed stations 2S(i, 1) having the largest uplink transmission power in the relayed stations 2S(i, j). The base station 1 sets the uplink transmission power of the specified relayed stations 2S (i, 1) to uplink transmission power $P_{r(i)}$ of the relay station 2R(i) (S42, S43, S44) . The base station 1 increases the uplink transmission power $P_{s(I,\,j)}$ of each of the relayed stations 2S (i, j) having the second largest and subsequent uplink transmission power up to transmission power $P_{s(i, j-1)}$ higher by one stage (S45) . The base station 1 repeats the processes of S43, S44 by the relayed station count $K_{r, s}$ of the relayed stations of which the data are relayed by the relay station 2R(i) (S46), and increases the transmission power of each of the relayed stations 2S(i, j) by one stages. Note that when the relay station finishes transmitting the uplink data of any one of the relayed stations 2S(i, j) thereafter, the base station 1 may simply increase, by one stages, the transmission power of the relayed station 2S(i, j+1) and subsequent stations each having the transmission power lower than the power of the relayed station 2S(i, j) with the transmission being finished. The processing in FIG. 20 is one example of a process in such an instance that the relay terminal completes the transmission of the uplink communication data based on the communication request occurring in the relay terminal before the relay terminal completes the relay of the uplink communication data of the relayed terminal. The process of S45 is one example of increasing the transmission power when the relay terminal transmits the uplink communication data of the relayed terminal. The process of S45 is also one example of getting the relay terminal to increase the transmission power for transmitting the uplink communication data of the relayed terminal upon completing the transmission of the uplink communication data based on the communication request occurring in the relay terminal before completing the relay of the uplink communication data of the relayed terminal.

By the process described above, when the relay station 2R completes the transmission of the uplink data of the self-station, the base station 1 increases the transmission power of the relayed station 2S but decreases the transmission error rate, whereby the data may be relayed at high efficiency. Also, when finishing transmitting the uplink data of any one of the relayed stations 2S(i, j), the base station 1 increases the transmission power of the subordinate relayed station 2S(i, j+1) and subsequent stations but decreases the transmission error rate, whereby the data may be relayed highly efficiently. Note that when the relay station 2R finishes transmitting the uplink data of the self-station before implementing the initially-set consecutive transmission count N, the base station 1 may get the relay station 2R to continue the data transmission by only the initial consecutive transmission count N as it is in place of the processing in FIG. 20.

FIG. 21 is a flowchart illustrating processes of the base station 1 when the relay station 2R(i) finishes transmitting the uplink data of any one of the relayed stations S (i, j) with the data being relayed by the relay station 2R(i). In these processes, the base station 1 determines whether there exists the relayed station S (i, j+1) next to the relayed station S(i, j) with the data transmission being finished. To be specific, the base station 1 determines whether the relayed station S(i, j) with the data transmission being finished is the $K_{r, s}$-th, i.e., last relayed station 2S (S47, S48). When the next relayed station S(i, j+1) exists (N in S48), the base station 1 increases the transmission power, by one stages, of the subordinate relayed station S(i, j+1) and subsequent stations (S49) . FIG. 21 illustrates one example of the process in such a case that the relay terminal completes the relay of the uplink communication data of any one of the plural relayed terminals with the data being relayed by the relay terminal. The process of S49 is one example where the relay terminal increases the transmission power for relaying the uplink communication data of the relayed terminal being set with the transmission power lower than the power of the relayed terminal with the relay being completed. The process of S49 is also one example where the controller of the base station 1 gets the relay terminal to increase the transmission power for relaying the uplink communication data of the relayed terminal being set with the transmission power lower than the power of the relayed terminal with the relay being completed. Whereas when the next relayed station S (i, j+1) does not exist (Y in S48), the base station 1 finishes processing.

(Effects of Embodiment)

As discussed above, according to the embodiment, the terminal 2 operating as the relay station 2R and the terminal 2 operating as the relayed station 2S are provided in the communication system 100 in which the plurality of terminals 2 is NOMA-connected to the base station 1. The relay station 2R transmits, to the base station 1, the overlap data given by getting the uplink communication data coming from the relayed station 2S to overlap with the uplink communication data based on the communication request occurring in the relay station 2R. Consequently, even when the reception signal received by the base station 1 directly from the relayed station 2S has only low SNR, the base station 1 is enabled to receive the signal efficiently. To be specific, the relay station 2R relays the reception signal from the relayed station 2S, and the base station 1 is thereby enabled to receive the signal from the relayed station 2S with the reception power lower by the predetermined value ∆P than the reception power of the relay station 2R. As a result, it is feasible to effectively enhance the SNR of the reception signal coming from the relayed station 2S and to improve the transmission error rate. Accordingly, in the communication system 100, for example, even the relayed station 2S existing in the environment exhibiting the large path loss (propagation loss) as at the cell edge of the radio network RN or as within the tunnel, is enabled to transmit the uplink data to the base station 1 highly efficiently.

According to the embodiment, the base station 1 selects the relay station 2R and the relayed station 2S described as such. In other words, according to the embodiment, the base station 1 capable of grasping the condition of the reception power from the terminal 2 is enabled to properly select the relay station 2R and the relayed station 2S.

According to the embodiment, the base station 1 sets the terminal 2-k (ID:k) as the candidate for the relay station 2R when the propagation loss $L_k$ up to the base station 1 from the terminal 2-k (terminal ID: k) is lower than the propagation loss threshold value $Lt_{h,0}$. When the propagation loss $L_k$ is larger than the threshold value $Lt_{h,1}$, the terminal 2-k (ID:k) is selected as the candidate for the relayed station 2S. The base station 1 is therefore enabled to select the desirable candidate for the relay station 2R and the desirable candidate for the relayed station 2S in terms of the propagation loss $L_k$ of the propagation path.

The base station 1 determines whether the propagation loss $L_{r,s}$ given through the terminal 2-r as the candidate for the relay station 2R is larger by the relay gain threshold value $\Delta$dB than the propagation loss $L_s$ given not through the relay station. When the propagation loss $L_{r,s}$ is larger by the relay gain threshold value $\Delta$dB than the propagation loss $L_s$, the base station 1 selects the terminal 2-r to be the relay station 2R and the terminal 2-s to be the relayed station 2S. The base station 1 is therefore enabled to select the relay station 2R and the relayed station 2S by specifying the candidate for the relay station 2R and the candidate for the relayed station 2S, which selection improves the propagation loss by relaying.

According to the embodiment, the relay station 2R is NOMA-connectible to the plurality of relayed stations 2S. In other words, the communication system 100 enables the relay station 2R to perform the simultaneous communications with the plurality of relayed stations 2S.

According to the embodiment, the base station 1, when setting the transmission power $P_r+L_r$ for the relay station 2R so as to enable the base station 1 to receive the data with the reception power $P_r$, sets the transmission power $P_r+L_r-\Delta P$ for the first relayed station 2S. The base station 1 is thereby enabled to receive the data with the reception power $P_r-\Delta P$ thereat. Generally, the base station 1 is capable of setting the transmission power $P_r+L_r-s\Delta P$ for the s-th relayed station 2S in the relay stations 2R so as to enable the base station 1 to receive the data with the reception power $P_r-s\Delta P$. To be specific, the base station 1 gives such an indication that the power for the relay station 2R to relay the uplink communication data coming from the relayed station 2S takes the value smaller by the fourth criterion value $\Delta P$ than the power to transmit the uplink communication data based on the communication request occurring in the relay terminal. Hence, the base station 1 sets the power difference by only the fourth criterion value $\Delta P$ between the reception power from the self-relay-station 2R and the reception power from the relayed station 2S of which the data are relayed by the relay station 2R, thereby enabling the relay based on the NOMA-connections. Also when the relay station 2R relays the uplink power coming from the plurality of relayed stations 2S, the relay based on the NOMA-connections is rendered feasible by providing the power difference by only the fourth criterion value $\Delta P$ stepwise.

When the relay station 2R finishes transmitting the uplink data of the self-station, the base station 1 causes the relay station 2R to set the uplink transmission power of the relayed station 2S having the largest uplink transmission power in the relayed stations 2S, to the uplink transmission power $P_r$ of the relay station 2R. Accordingly, the communication system 100 enables the relay station 2R to relay the data highly efficiently by increasing the transmission power of the relayed station 2S but decreasing the transmission error rate upon completing the transmission of the uplink data of the self-station.

The base station 1 gives the same indication also when the relay station 2R finishes the transmission of the uplink data of any one of the relayed stations 2S(i, j). Specifically, the base station 1 may simply instruct the relay station 2R(i) to increase, by one stages, the transmission power of the relayed station 2S(i, j+1) and subsequent stations each having the transmission power of the lower order than the power of the relayed station 2S(i, j) with the transmission being finished. Accordingly, in the communication system 100, upon completing the transmission of the uplink data of any one of the relayed stations 2S(i, j), there increases the transmission power in the uplink relay of the relayed station 2S(i, j+1) with the transmission power being set lower than the above and with the data being relayed. The communication system 100 is thereby enabled to relay the data highly efficiently by decreasing the transmission error rate of the relayed station 2S(i, j+1).

(Modified Example)

In FIG. 13, the base station 1 determines whether the propagation loss $L_{r,s}$ given through the terminal 2-r as the candidate for the relay station 2R gets improved by the relay gain threshold value $\Delta$dB or above (i.e., the propagation loss decreases under) the propagation loss $L_s$ given not through the relay station. In place of the determination made as such, the base station 1, when capable of collecting positional information of the terminal, may set a relay source distance D. To be specific, the base station 1 sets the relayed distance D and, when a relayed station candidate 2-s exists within a radius D from a position of the terminal 2-r as the candidate for the relay station, may thereby select the relay station 2R and the relayed station 2S.

<Second Embodiment>

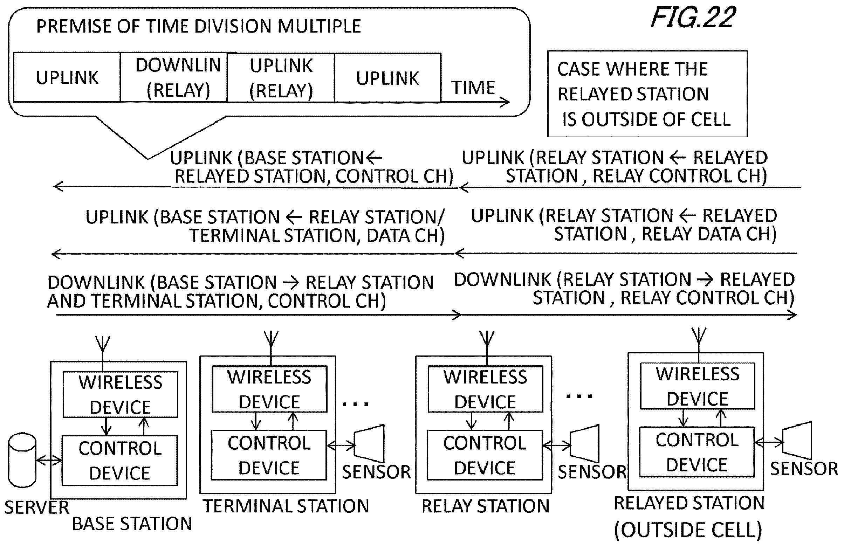

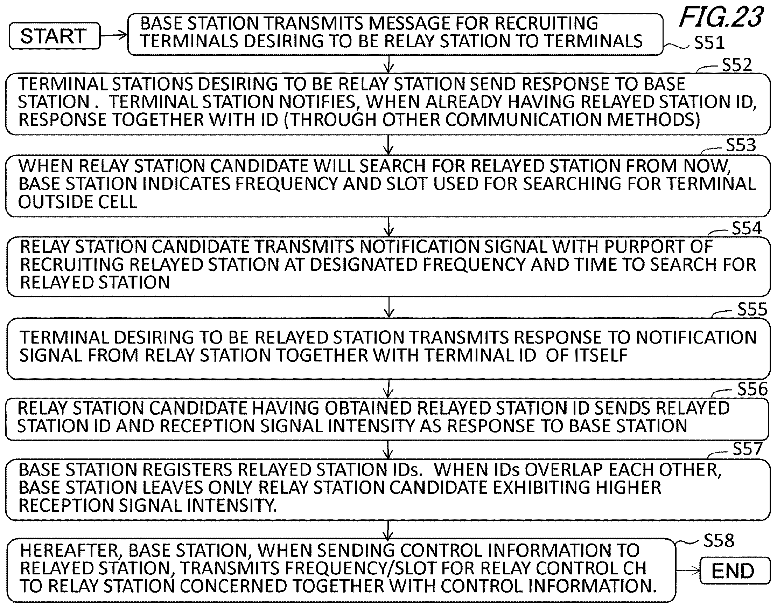

The communication system 100 according to a second embodiment will hereinafter be described with reference to FIGS. 22 and 23. The first embodiment has exemplified the process of how the relay station 2R relays the uplink data of the relayed station 2S in the communication system 100 having the NOMA-connections where the relayed stations 2S exist within the cell of the base station 1. The second embodiment will describe the communication system 100, in which the relay station 2R relays the data from the terminal 2 as the relayed station 2S not existing within the cell of the base station 1. Except that at least a part of the relayed stations 2S do not exist within the cell of the base station 1, the configuration and the operations of the second embodiment are the same as those of the first embodiment. Such being the case, the same components as those of the first embodiment are marked with the same reference symbols, and the explanations thereof will be omitted. Note that processes of the communication system 100 according to the second embodiment do not compete with the processes of the first embodiment but may be executed in combination with the processes of the first embodiment.

FIG. 22 is a flowchart illustrating uplink and downlink data flows between the base station 1 and the terminals according to the second embodiment. In FIG. 22, the relayed station 2S does not exist within the cell of the base station 1, and hence the relay station 2R also relays the communication data via an uplink control channel and a downlink control channel in addition to the uplink data channel.

Therefore, in the second embodiment also, similarly to the first embodiment, it follows that the physical resources defined by the frequency and the time are used in overlap. The base station 1 allocates at least one timeslot to the downlink control channel down to the relayed station 2S from the relay station 2R. The base station 1 also allocates at least one timeslot to the uplink control channel up to the relay station 2R from the relayed station 2S.

FIG. 23 is a flowchart illustrating a method of searching for the relayed station 2S. In this process, to begin with, the base station 1 transmits a message for recruiting the terminal 2 desiring to operate as the relay station 2R to the respective terminals 2 (S51) . The terminal 2 desiring to operate as the relay station 2R transmits a response to the base station 1. The terminal 2 already has the terminal ID of the relayed station 2S as a relay target, in which case the terminal 2 notifies the response together with the terminal ID (S52). Note that the terminal 2 may simply acquire the terminal ID of the relayed station 2S as the relay target through other communication methods. Herein, other communication methods are, e.g., local communication methods between the plural terminals 2. The local communication methods are exemplified by wireless LAN, Bluetooth (registered trademark), Bluetooth (registered trademark) Low Energy (BLE), and 5G side link communications. When the terminal 2 becoming the candidate for the relay station 2R searches for the relayed station 2S therefrom, the base station 1 indicates the frequency and the timeslot used for searching for the terminal 2 positioned outside the cell to the terminal 2 becoming the candidate for the relay station 2R (S53). The terminal 2 becoming the candidate for the relay station 2R transmits a notification signal with a purport of recruiting the relayed station 2S at the designated frequency and time in order to search for the terminal 2 becoming the relayed station 2S existing outside the cell (S54).

The terminal 2-s desiring to be the relayed station 2S transmits a response to the notification signal sent from the terminal 2-r becoming the candidate for the relay station 2R, together with the terminal ID (referred to as a relayed station ID) of itself (S55) . The candidate terminal 2-r for the relay station 2R, which acquires the terminal ID of the terminal 2-s becoming to be the relayed station 2S, sends the relayed station ID and a reception signal intensity as the response to the base station 1 (S56).

The base station 1 registers the relayed station ID. When the plural candidate terminals 2-r for the relay station 2R exist for the candidate for the relayed station 2S, the base station 1 leaves only the candidate terminal 2-r for the relay station 2R, which has the higher reception signal intensity (S57) . Hereafter, the base station 1, when sending control information to the relayed station 2S, transmits a frequency/slot for the relay control CH to the relay station 2R concerned together with the control information (S58).

The processes described above enable the relay station 2R to relay the downlink control channel, the uplink control channel and an uplink data channel to the terminal 2 existing outside the cell. The configuration in FIG. 22 and the processes in FIG. 23 are one example where the relayed terminal includes the terminal 2 positioned outside the cell provided by the base station 1. The configuration in FIG. 22 and the processes in FIG. 23 are also one example where the controller of the base station 1 causes the relay terminal to search for the terminal positioned outside the cell provided by the base station and to relay the communication data coming from the searched terminal.

<Other Embodiments>

Each of the embodiments discussed above is one example, and the present disclosure may be embodied by being properly modified within the range that does not deviate from the gist thereof. The processes and the means described in the present disclosure may be carried out by being freely combined as far as none of technical contradictions occur.

The process described as being executed by one device may also be executed by a plurality of devices in the way of sharing the process. Alternatively, it does not cause any problem that the processes described as being executed by the different devices are executed by one device. A design of how the respective functions are attained by what kind of hardware configuration is flexibly modifiable.

**Claims**

1. A communication system (100) comprising:

    a base station (1);
    a plurality of terminals (2,2R,2S,2RA,2RB) to be Non-Orthogonal Multiple Access-connected (NOMA-connected) to the base station (1), the plurality of terminals (2,2R,2S,2RA,2RB) including:

        a relay terminal (2R,2RA,2RB) to relay uplink communication data to the base station (1); and
        a relayed terminal (2S) to transmit the uplink communication data to the base station (1) via the relay terminal (2R,2RA,2RB)
        wherein the relay terminal (2R,2RA,2RB) transmits, to the base station (1), overlap data given by getting uplink communication data based on a communication request occurring in the relay terminal (2R, 2RA, 2RB) to overlap with the uplink communication data coming from the relayed terminal (2S).

2. The communication system according to claim 1, wherein the base station (1) obtains a propagation loss of a propagation path between the base station (1) and each of the plurality of terminals (2,2R,2S,2RA,2RB), sets terminals (2, 2R, 2S,2RA, 2RB) with the propagation loss of the propagation path being smaller than a first criterion value, as candidates for the relay terminal (2R,2RA,2RB), sets terminals (2, 2R, 2S, 2RA, 2RB) with the propagation loss of the propagation path being equal to or larger than a second criterion value larger than the first criterion value, as candidates for the relayed terminal (2S), and selects the relay terminal (2R,2RA,2RB) and the relayed terminal (2S) from within the candidates for the relay terminal (2R,2RA,2RB) and the candidates for the relayed terminal (2S).

3. The communication system according to claim 2, wherein the base station (1) selects the candidate for the relayed terminal as the relayed terminal and the candidate for the relay terminal (2R,2RA,2RB) as the relay terminal (2R,2RA,2RB) when a propagation loss given upon performing communications with the base station (1) in such a way that data of the candidate for the relayed terminal (2S) are relayed by the candidate for the relay terminal (2R,2RA,2RB) improves more by a third criterion value or above than a propagation loss given upon performing the communications with the base station (1) in such a way that the data of the candidate for the relayed terminal (2S) are not relayed by the candidate for the relay terminal (2R,2RA,2RB).

4. The communication system according to any one of claims 1 through 3, wherein the relay terminal (2R,2RA,2RB) is NOMA-connected to plural relayed terminals (2S).

5. The communication system according to any one of claims 1 through 4, wherein the relay terminal (2R,2RA,2RB), when relaying the uplink communication data coming from the relayed terminal (2S), transmits the uplink communication data coming from the relayed terminal (2S) to the base station (1) with transmission power smaller by at least a fourth criterion value than transmission power used for transmitting the uplink communication data based on the communication request occurring in the relay terminal (2R,2RA,2RB).

6. The communication system according to claim 5, wherein the relay terminal (2R,2RA,2RB) increases the transmission power for transmitting the uplink communication data of the relayed terminal (2S) upon completing the transmission of the uplink communication data based on the communication request occurring in the relay terminal (2R,2RA,2RB) before completing the relay of the uplink communication data of the relayed terminal (2S).

7. The communication system according to claim 5 or 6, wherein the relay terminal (2R,2RA,2RB) increases the transmission power for relaying the uplink communication data of a first relayed terminal (2S) having the transmission power being set lower than that of a second relayed terminal (2S) with the relay being completed when the relay terminal (2R,2RA,2RB) completes the relay of the uplink communication data of any one of plural relayed terminals (2S) including the first relayed terminal (2S) and the second relayed terminal (2S) .

8. The communication system according to any one of claims 1 through 7, wherein the relayed terminal (2S) includes a terminal (2) positioned outside a cell provided by the base station (1).

9. A base station (1) configured to be NOMA-connected with a plurality of terminals (2,2R,2S,2RA,2RB), comprising:
   a controller (11,12) to execute:

       selecting, from the plurality of terminals (2,2R,2S,2RA,2RB), a relay terminal (2R,2RA,2RB) to relay uplink communication data to the base station (1) and a relayed terminal (2S) to transmit the uplink communication data to the base station (1) via the relay terminal (2R,2RA,2RB); and

receiving, from the relay terminal (2R,2RA,2RB), overlap data given by getting uplink communication data based on a communication request occurring in the relay terminal (2R,2RA,2RB) to overlap with the uplink communication data coming from the relayed terminal (2S).

10. The base station (1) according to claim 9, wherein the controller (11,12) obtains a propagation loss of a propagation path between the base station (1) and each of the plurality of terminals (2,2R,2S,2RA,2RB), sets terminals (2, 2R, 2S, 2RA, 2RB) with the propagation loss of the propagation path being smaller than a first criterion value as candidates for the relay terminal (2R,2RA,2RB), sets terminals (2, 2R, 2S, 2RA, 2RB) with the propagation loss of the propagation path being equal to or larger than a second criterion value larger than the first criterion value as candidates for the relayed terminal (2S), and selects the relay terminal (2R,2RA,2RB) and the relayed terminal (2S) from within the candidates for the relay terminal (2R,2RA,2RB) and the candidates for the relayed terminal (2S).

11. The base station (1) according to claim 10, wherein the controller (11,12) selects the candidate for the relayed terminal (2S) as the relayed terminal (2S) and the candidate for the relay terminal (2R,2RA,2RB) as the relay terminal (2R,2RA,2RB) when a propagation loss given upon performing communications with the base station (1) in such a way that data of the candidate for the relayed terminal (2S) are relayed by the candidate for the relay terminal (2R,2RA,2RB) improves more by a third criterion value or above than a propagation loss given upon performing the communications with the base station (1) in such a way that the data of the candidate for the relayed terminal (2S) are not relayed by the candidate for the relay terminal (2R,2RA,2RB).

12. The base station according to any one of claims 9 through 11, wherein the controller (11,12) indicates transmission power smaller by at least a fourth criterion value than transmission power when transmitting the uplink communication data based on the communication request occurring in the relay terminal (2R,2RA,2RB) as transmission power to the relay terminal (2R,2RA,2RB) when the relay terminal (2R,2RA,2RB) relays the uplink communication data coming from the relayed terminal (2S).

13. The base station according to claim 12, wherein the controller (11,12) gets the relay terminal (2R,2RA,2RB) to increase the transmission power for transmitting the uplink communication data of the relayed terminal (2S) upon completing the transmission of the uplink communication data based on the communication request occurring in the relay terminal (2R,2RA,2RB) before completing the relay of the uplink communication data of the relayed terminal (2S).

14. The base station according to claim 12 or 13, wherein the controller (11,12) gets the relay terminal (2R,2RA,2RB) to increase the transmission power for relaying the uplink communication data of a first relayed terminal (2S) having the transmission power being set lower than that of a second relayed terminal (2S) with the relay being completed when the relay terminal completes the relay of the uplink communication data of any one of plural relayed terminals (2S) including the first relayed terminal (2S) and the second relayed terminal (2S).

15. The base station according to any one of claims 9 through 14, wherein the controller (11,12) gets the relay terminal (2R,2RA,2RB) to search for a terminal (2) positioned outside a cell provided by the base station (1) and to relay the communication data coming from the searched terminal (2).

16. A terminal (2,2R,2S,2RA,2RB) in a communication system (100) configured to establish NOMA-connections between a plurality of terminals (2,2R,2S,2RA,2RB) and a base station (1), the terminal (2,2R,2S,2RA,2RB) comprising:
a controller (11,12) to execute:

performing communications with a base station (1) as a relay terminal (2R,2RA,2RB) to relay uplink communication data to the base station (1) or as a relayed terminal (2S) to transmit the uplink communication data to the base station (1) via the relay terminal (2R,2RA,2RB); and
transmitting, to the base station (1), overlap data given by getting uplink communication data based on a communication request occurring in the relay terminal (2R,2RA,2RB) to overlap with the uplink communication data coming from the relayed terminal (2S).

17. A communication method of a base station (1) to which a plurality of terminals (2,2R,2S,2RA,2RB) is NOMA-connected, comprising:

**EP 4 160 936 A1**

selecting, from the plurality of terminals (2,2R,2S,2RA,2RB), a relay terminal (2R,2RA,2RB) to relay uplink communication data to the base station (1) and a relayed terminal (2S) to transmit the uplink communication data to the base station (1) via the relay terminal (2R,2RA,2RB); and

receiving, from the relay terminal (2R,2RA,2RB), overlap data given by getting uplink communication data based on a communication request occurring in the relay terminal (2R,2RA,2RB) to overlap with the uplink communication data coming from the relayed terminal (2S).

18. The communication method according to claim 17, further comprising:

obtaining a propagation loss of a propagation path between the base station (1) and each of the plurality of terminals (2,2R,2S,2RA,2RB);

setting the terminals (2,2R,2S,2RA,2RB) with the propagation loss of the propagation path being smaller than a first criterion value as candidates for the relay terminal (2R, 2RA, 2RB) ;

setting the terminals (2,2R,2S,2RA,2RB) with the propagation loss of the propagation path being equal to or larger than a second criterion value larger than the first criterion value as candidates for the relayed terminal (2S) ; and

selecting the relay terminal (2R,2RA,2RB) and the relayed terminal (2S) from within the candidates for the relay terminal (2R,2RA,2RB) and the candidates for the relayed terminal (2S).

19. The communication method according to claim 18, further comprising:
selecting the candidate for the relayed terminal (2S) as the relayed terminal (2S) and the candidate for the relay terminal (2R, 2RA, 2RB) as the relay terminal (2R, 2RA, 2RB) when a propagation loss given upon performing communications with the base station (1) in such a way that data of the candidate for the relayed terminal (2S) are relayed by the candidate for the relay terminal (2R,2RA,2RB) improves more by a third criterion value or above than a propagation loss given upon performing the communications with the base station (1) in such a way that the data of the candidate for the relayed terminal (2S) are not relayed by the candidate for the relay terminal (2R,2RA,2RB).

20. A communication method of a terminal in a plurality of terminals (2,2R,2S,2RA,2RB) configured to establish NOMA-connections to a base station (1), the communication method comprising:

performing communications with the base station (1) by getting the terminal to operate as a relay terminal (2R,2RA,2RB) to relay uplink communication data to the base station (1) or as a relayed terminal (2) to transmit the uplink communication data to the base station (1) via the relay terminal (2R,2RA,2RB); and

transmitting, to the base station (1), overlap data given by getting uplink communication data based on a communication request occurring in the relay terminal (2R,2RA,2RB) to overlap with the uplink communication data coming from the

relayed terminal (2S).

**20**

*FIG.1*

DECODE SIGNAL OF A, REMOVE SIGNAL

DECODE SIGNAL OF B, REMOVE SIGNAL

DECODE ALL SIGNALS

A

FREQUENCY

B
C

FREQUENCY

C

FREQUENCY

100

1

DEVICE A

DEVICE B

DEVICE C

2-1

2-2

2-3

FREQUENCY

RN

TIME

EP 4 160 936 A1

*FIG.2*

FIG.3

EP 4 160 936 A1

# FIG.4

RELAY STATION
NOT EXISTING

RELAY STATION
EXISTING

CELL EDGE

CELL EDGE

LARGE
REDUCTION
OF DESIRED
NUMBER OF
SLOTS

## FIG.5

PREMISE OF TIME DIVISION MULTIPLE

| UPLINK | DOWNLIN | UPLINK (RELAY) | UPLINK | TIME → |

CASE WHERE THE RELAYED STATION IS IN CELL

UPLINK (BASE STATION ← RELAYED STATION, CONTROL CH)

UPLINK (BASE STATION ← RELAY STATION/ TERMINAL STATION, DATA CH)

UPLINK (RELAY STATION ← RELAYED STATION, RELAY DATA CH)

DOWNLINK (BASE STATION → RELAY STATION AND TERMINAL STATION, CONTROL CH)

WIRELESS DEVICE — 1

CONTROL DEVICE

SERVER
BASE STATION

WIRELESS DEVICE ~2N
CONTROL DEVICE — SENSOR
TERMINAL STATION

WIRELESS DEVICE ~2R
CONTROL DEVICE — SENSOR
RELAY STATION

WIRELESS DEVICE ~2S
CONTROL DEVICE — SENSOR
RELAYED STATION

$K - K_r - K_s$

NUMBER OF RELAY STATIONS: $K_r$

NUMBER OF RELAYED STATIONS $K_s$

TOTAL NUMBER OF TERMINALS: K

*FIG.6*

| UPLINK (RELAY) | | | | UPLINK | | | |
|---|---|---|---|---|---|---|---|
| RS<br>4→3 | DS<br>4→3 | RS<br>5→3 | DS<br>5→3 | RS<br>1~3<br>→BS | DS<br>1~3<br>→BS | RS<br>1~3<br>→BS | DS<br>1~3<br>→BS |

TIME →

*FIG.7*

| UPLINK<br>(RELAY) | | UPLINK | | | |
|---|---|---|---|---|---|
| RS<br>4~5<br>→3 | DS<br>4~5<br>→3 | RS<br>1~3<br>→BS | DS<br>1~3<br>→BS | RS<br>1~3<br>→BS | DS<br>1~3<br>→BS |

TIME →

*FIG.8*

EP 4 160 936 A1

*FIG.9A*

FIG.9B

2RA    TO SW3 OF FIG.9A

DS PROCESSOR

22A

EP 4 160 936 A1

FIG.10

FIG.11A

FIG.11B

TO SW7 OF FIG.11A

2RB

EP 4 160 936 A1

DATA
(RELAYED
STATION)

221
CRC
ENCODER

222
ERROR
CORRECTION
ENCODER

223
MODULATOR

AMPLITUDE
ADJUSTER
224

225
CP
INSERTER

226

DATA
(RELAYED
STATION)

221
CRC
ENCODER

222
ERROR
CORRECTION
ENCODER

223
MODULATOR

AMPLITUDE
ADJUSTER
224

DATA
(SELF-
STATION)

221
CRC
ENCODER

222
ERROR
CORRECTION
ENCODER

223
MODULATOR

AMPLITUDE
ADJUSTER
224

DS PROCESSOR

22A

EP 4 160 936 A1

## FIG.12

```
          ┌─────────────────────────────┐
          │            START            │
          └─────────────────────────────┘
                         │
                         ▼
    ┌─────────────────────────────────────────────┐
    │ MEASURE PROPAGATION LOSS $L_k$ BETWEEN BASE  │ ── S1
    │ STATION AND TERMINAL STATION                 │
    └─────────────────────────────────────────────┘
                         │
                         ▼
    ┌─────────────────────────────────────────────┐
    │ SELECT CANDIDATES FOR RELAY STATION AND      │
    │ RELAYED STATION, MEASURE PROPAGATION LOSS    │
    │ $L_{r,s}$ BETWEEN RELAY STATION AND RELAYED  │ ── S2
    │ STATION, AND SELECT RELAY STATION AND        │
    │ RELAYRD STATION                              │
    └─────────────────────────────────────────────┘
                         │
                         ▼
    ┌─────────────────────────────────────────────┐
    │ SET TRANSMISSION POWER $P_k$                 │ ── S3
    └─────────────────────────────────────────────┘
                         │
                         ▼
          ┌─────────────────────────────┐
          │             END             │
          └─────────────────────────────┘
```

EP 4 160 936 A1

## FIG.13

```
                    START

┌─────────────────────────────────────────────────────┐  S21
│ SELECT CANDIDATE FOR RELAY STATION WHEN PROPAGATION   │
│ LOSS $L_k$ OF TERMINAL IS LOWER THAN THRESHOLD VALUE  │
│ $L_{th,0}$ OF PROPAGATION LOSS, AND SELECT CANDIDATE  │
│ FOR RELAYED STATION WHEN LARGR THAN THRESHOLD         │
│ VALUE $L_{th,1}$                                      │
└─────────────────────────────────────────────────────┘

┌─────────────────────────────────────────────────────┐  S22
│ INSTRUCT RELAY STATION CANDIDATE r AND RELAYED        │
│ STATION CANDIDATE s TO MEASURE PROPAGATION LOSS       │
│ $L_{r,s}$                                             │
└─────────────────────────────────────────────────────┘

┌─────────────────────────────────────────────────────┐  S23
│ SELECT RELAY STATION r AND RELAYED STATION s WHEN     │
│ MEASURE PROPAGATION LOSS $L_{r,s}$ VIA RELAYS TATION  │
│ CANDIDATE r IS SMALLER BY RELAY GAIN THRESHOLD        │
│ VALUE ΔdB OR ABOVE THAN PROPAGATION LOSS $L_s$ NOT    │
│ VIA RELAY STATION (SELECT RELAY STATION EXHIBITING    │
│ LARGE REDUCTION EFFECT OF PROPAGATION LOSS WHEN       │
│ PLURALITY OF RELAY STATIONS SATISFIES THIS CRITERION) │
└─────────────────────────────────────────────────────┘

┌─────────────────────────────────────────────────────┐  S24
│ UPDATE PROPAGATION LOSS $L_s$ OF RELAYED STATION s TO │
│ VALUE GIVEN BY ADDING REQUEST POWER DIFFERENCE ΔP TO  │
│ PROPAGATION LOSS $L_r$ OF RELAY STATION r.            │
│ HOWEVER, ADD INTEGRAL MULTIPLE OF ΔP IN ASCENDING     │
│ ORDER OF PROPAGATION LOSS $L_{r,s}$ BETWEEN RELAYED   │
│ STATION AND RELAY STATION WHEN PLURALITY OF RELAYED   │
│ STATIONS EXISTS                                       │
└─────────────────────────────────────────────────────┘

                     END
```

FIG.14

EP 4 160 936 A1

*FIG.15*

ROPAGATION LOSS $L_k$

TERMINAL ID

$L_1 L_2 L_3$

*FIG.16*

ROPAGATION LOSS $L_k$

TERMINAL ID

$L_1 L_2 L_3$

*FIG.17*

RELAY STATION $i = 1$

$i = i + 1$

SIMULTANEOUS TRANSMISSIO ?  — S31

Y — SIMULTANEOUS

N — INDIVIDUAL

RELAYED STATION $j = 1$ — S32

$j = j + 1$

$j = 1$? — S33

Y

N

S34

$P_{r(i),s(i,j)} = P_{max,UE}$

S35

$$P_{r(i),s(i,j)} = \min\left[P_{max,UE}, P_{r(i),s(i,j-1)} - L_{r(i),s(i,j-1)} + L_{r(i),s(i,j)} - \Delta P\right]$$

S38

$P_{r(i),k'} = P_{max,UE}$

$j = K_{r,s}$? — S36

N

Y

$i = K_r$? — S37

N

Y

END

*FIG.18*

$k = k + 1$

$$k = 1$$

S3A

$$k = 1?$$

Y

S3C

S3B

$$P_k = P_{max,UE}$$

N — RELAYED STATION? — Y

S3D

$$P_k = \min\left[P_{max,UE}, P_{k-1} - L_{k-1} + L_k - \Delta P\right]$$

S3E

$$P_k = \min\left[P_{max,UE}, P_{k-1} - L_{k-1} + L_k\right]$$

N

S3F

$$k = K?$$

Y

END

FIG.19

G14

RECEPTION POWER AT BASE STATION

2-1 2-2 2-3
2-4
2-5

NOISE FLOOR

$$r(1) = 3$$

$$k'(1,1) = 4, k'(1,2) = 5$$

⟱ UPDATE

G15

RECEPTION POWER AT BASE STATION

2-1 2-2
2-4
2-5

NOISE FLOOR

$$P_4 \rightarrow P_3$$
$$P_5 \rightarrow P_4$$

*FIG.20*

FINISH TRANSMITTING DATA
OF RELAY STATION 2R(i)

IS DATA TRANSMISSION
OF RELAYED STATION
2S(i) FINISHED? — S41    Y

$j = j + 1$    N    S42

RELAYED STATION $j = 1$

S43

Y    $j = 1$?    N

$P_{s(i,j)} = P_{r(i)}$ — S44    $P_{s(i,j)} = P_{s(i,j-1)}$ — S45

N    $j = K_{r,s}$? — S46

Y

FINISH
UPDATING

## FIG.21

FINISH DATA TRANSMISSION OF
RELAYED STATION 2S(i,j)

S47

$$j = j + 1$$

S48

$$j = K_{r,s}+1 \ ?$$

Y

N

$$P_{S(i,j)} = P_{S(i,j-1)}$$ S49

FINISH
UPDATING

## FIG.22

PREMISE OF TIME DIVISION MULTIPLE

| UPLINK | DOWNLIN (RELAY) | UPLINK (RELAY) | UPLINK | TIME → |

CASE WHERE THE RELAYED STATION IS OUTSIDE OF CELL

UPLINK (BASE STATION← RELAYED STATION, CONTROL CH)   UPLINK (RELAY STATION ← RELAYED STATION , RELAY CONTROL CH)

←

UPLINK (BASE STATION ← RELAY STATION/ TERMINAL STATION, DATA CH)   UPLINK (RELAY STATION ← RELAYED STATION , RELAY DATA CH)

←

DOWNLINK (BASE STATION → RELAY STATION AND TERMINAL STATION, CONTROL CH)   DOWNLINK (RELAY STATION → RELAYED STATION , RELAY CONTROL CH)

→

| WIRELESS DEVICE | WIRELESS DEVICE | WIRELESS DEVICE | WIRELESS DEVICE |
| CONTROL DEVICE | CONTROL DEVICE | CONTROL DEVICE | CONTROL DEVICE |

SERVER
BASE STATION   · · ·   TERMINAL STATION   SENSOR   · · ·   RELAY STATION   SENSOR   RELAYED STATION (OUTSIDE CELL)   SENSOR

EP 4 160 936 A1

*FIG.23*

START → BASE STATION TRANSMITS MESSAGE FOR RECRUITING TERMINALS DESIRING TO BE RELAY STATION TO TERMINALS ~S51

↓ ⌐S52

TERMINAL STATIONS DESIRING TO BE RELAY STATION SEND RESPONSE TO BASE STATION . TERMINAL STATION NOTIFIES, WHEN ALREADY HAVING RELAYED STATION ID, RESPONSE TOGETHER WITH ID (THROUGH OTHER COMMUNICATION METHODS)

↓ ⌐S53

WHEN RELAY STATION CANDIDATE WILL SEARCH FOR RELAYED STATION FROM NOW, BASE STATION INDICATES FREQUENCY AND SLOT USED FOR SEARCHING FOR TERMINAL OUTSIDE CELL

↓ ⌐S54

RELAY STATION CANDIDATE TRANSMITS NOTIFICATION SIGNAL WITH PURPORT OF RECRUITING RELAYED STATION AT DESIGNATED FREQUENCY AND TIME TO SEARCH FOR RELAYED STATION

↓ ⌐S55

TERMINAL DESIRING TO BE RELAYED STATION TRANSMITS RESPONSE TO NOTIFICATION SIGNAL FROM RELAY STATION TOGETHER WITH TERMINAL ID OF ITSELF

↓ ⌐S56

RELAY STATION CANDIDATE HAVING OBTAINED RELAYED STATION ID SENDS RELAYED STATION ID AND RECEPTION SIGNAL INTENSITY AS RESPONSE TO BASE STATION

↓ ⌐S57

BASE STATION REGISTERS RELAYED STATION IDs. WHEN IDs OVERLAP EACH OTHER, BASE STATION LEAVES ONLY RELAY STATION CANDIDATE EXHIBITING HIGHER RECEPTION SIGNAL INTENSITY.

↓ ~S58

HEREAFTER, BASE STATION, WHEN SENDING CONTROL INFORMATION TO RELAYED STATION, TRANSMITS FREQUENCY/SLOT FOR RELAY CONTROL CH TO RELAY STATION CONCERNED TOGETHER WITH CONTROL INFORMATION. → END

Europäisches
Patentamt

European
Patent Office

Office européen
des brevets

# EUROPEAN SEARCH REPORT

Application Number

EP 22 19 8167

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OKAMOTO EIJI ET AL: "Performance Improvement of Low-Latency V2I Uplink Using Superposed Cooperative V2V Transmission", 2017 IEEE 86TH VEHICULAR TECHNOLOGY CONFERENCE (VTC-FALL), IEEE, 24 September 2017 (2017-09-24), pages 1-5, XP033319886, DOI: 10.1109/VTCFALL.2017.8288284 [retrieved on 2018-02-08] | 1,4-9, 12-17,20 | INV. H04B7/155 |
| Y | * page 1; figure 1 * <br> * page 2, left-hand column, lines 1-22 * <br> ----- | 2,3,10, 11,18,19 | |
| Y | US 2018/352411 A1 (RYU HYUN-SEOK [KR] ET AL) 6 December 2018 (2018-12-06) <br> * paragraphs [0006], [0036] – [0037]; figure 1 * <br> ----- | 2,3,10, 11,18,19 | |
| A | WO 2020/166200 A1 (SONY CORP [JP]) 20 August 2020 (2020-08-20) <br> * abstract * <br> & US 2022/124829 A1 (MATSUDA HIROKI [JP] ET AL) 21 April 2022 (2022-04-21) <br> * paragraphs [0155] – [0156], [0180] – [0187], [0301], [0546] – [0549]; figures 11-12 * <br> ----- | 1-20 | |

| TECHNICAL FIELDS SEARCHED (IPC) |
|---|
| H04W |
| H04B |

The present search report has been drawn up for all claims

| Place of search | Date of completion of the search | Examiner |
|---|---|---|
| Munich | 1 February 2023 | Staeger, Rainer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 8167

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2023

| Patent document cited in search report | | Publication date | Patent family member(s) | | Publication date |
|---|---|---|---|---|---|
| US 2018352411 | A1 | 06-12-2018 | CN | 107534831 A | 02-01-2018 |
| | | | KR | 20160121441 A | 19-10-2016 |
| | | | US | 2018352411 A1 | 06-12-2018 |
| | | | WO | 2016163809 A1 | 13-10-2016 |
| WO 2020166200 | A1 | 20-08-2020 | CN | 113396621 A | 14-09-2021 |
| | | | EP | 3927052 A1 | 22-12-2021 |
| | | | JP | 2020136741 A | 31-08-2020 |
| | | | US | 2022124829 A1 | 21-04-2022 |
| | | | WO | 2020166200 A1 | 20-08-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Study on NR coverage enhancements (Release 17). *3GPP TR 38.830,* December 2020

- **MORIYAMA et al.** Experimental Evaluation of a Novel Up-Link NOMA System for IoT Communication Equipping Repetition Transmission and Receive Diversity. *IEICE TRANS. COMMUN.,* August 2019, vol. E102-B (8), 1467-1476